(19) Europäisches Patentamt
European Patent Office
Office européen des brevets

(11) EP 3 083 492 B1

(12) # FASCICULE DE BREVET EUROPEEN

(45) Date de publication et mention de la délivrance du brevet:
**17.04.2019 Bulletin 2019/16**

(21) Numéro de dépôt: **14824421.3**

(22) Date de dépôt: **16.12.2014**

(51) Int Cl.:
***C01B 3/16*** (2006.01) ***C01B 3/52*** (2006.01)
***C01B 3/56*** (2006.01) ***C10G 2/00*** (2006.01)

(86) Numéro de dépôt international:
**PCT/EP2014/077972**

(87) Numéro de publication internationale:
**WO 2015/091490 (25.06.2015 Gazette 2015/25)**

(54) **PROCÉDÉ DE PURIFICATION DU GAZ DE SYNTHÈSE PAR VOIE DE LAVAGE SUR DES SOLUTIONS AQUEUSES D'AMINES**

VERFAHREN ZUR REINIGUNG VON SYNTHESEGAS DURCH AMINWÄSCHE MIT WÄSSRIGEN AMINLÖSUNGEN

METHOD FOR PURIFYING SYNTHESIS GAS BY AMINE SCRUBBING USING AQUEOUS AMINE SOLUTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2013 FR 1362751**

(43) Date de publication de la demande:
**26.10.2016 Bulletin 2016/43**

(73) Titulaires:
- **AXENS**
  **92508 Rueil-Malmaison Cedex (FR)**
- **Bionext**
  **60280 Venette (FR)**
- **Commissariat à l'Energie Atomique et aux Energies Alternatives**
  **75015 Paris (FR)**
- **IFP Energies nouvelles**
  **92500 Rueil-Malmaison (FR)**
- **Avril**
  **75008 Paris (FR)**
- **thyssenkrupp Industrial Solutions AG**
  **45143 Essen (DE)**
- **TOTAL RAFFINAGE CHIMIE**
  **92400 Courbevoie (FR)**

(72) Inventeurs:
- **CHICHE, David**
  **69007 Lyon (FR)**
- **LUCQUIN, Anne, Claire**
  **F-38550 Saint Maurice l'Exil (FR)**
- **ULLRICH, Norbert**
  **45139 Essen (DE)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2006/070018** **WO-A1-2010/013026**
**WO-A2-2009/019497** **DE-A1-102004 062 687**
**FR-A1- 2 420 568** **US-A- 5 441 990**
**US-A1- 2012 046 370**

- **Walter Boll ET AL: "Gas Production, 3. Gas Treating, 2. Carbon Monoxide Shift Conversion" In: "Ullmann's Encyclopedia of Industrial Chemistry", 15 octobre 2011 (2011-10-15), Wiley-VCH Verlag GmbH & Co. KGaA, Weinheim, Germany, XP055046055, ISBN: 978-3-52-730673-2 pages 1-8, DOI: 10.1002/14356007.o12_o02, 5.2.2. Chemical Absorption Processes - Amine Processes tableau 5**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- SUKUMARAN NAIR M P: "CO2 REMOVAL SYSTEMS FOR AMMONIA PLANTS - A SURVEY", NITROGEN AND METHANOL, BRITISH SULPHUR PUBLISHING, LONDON, GB, no. 264, 1 juillet 2003 (2003-07-01), pages 19/20,22-26,28, XP001167730, ISSN: 1462-2378

**Description**

## DOMAINE DE L'INVENTION

La présente invention concerne le domaine de la purification des gaz de synthèse contenant du monoxyde de carbone CO, en général. Elle concerne plus particulièrement les procédés permettant d'éliminer les gaz acides tels que par exemple le $CO_2$, l'$H_2S$, le COS, et l'HCN en mettant en oeuvre un lavage par un ou plusieurs solvants.

De manière avantageuse, le procédé de l'invention est mis en oeuvre en amont d'une unité de synthèse Fischer-Tropsch, de façon à éliminer les impuretés et en particulier les gaz acides qui sont néfastes au bon fonctionnement de ladite unité. Il peut également être utilisé afin de purifier le gaz de synthèse mis en oeuvre par exemple, dans les installations de cogénération, dans les procédés de synthèse chimique tels que les procédés de synthèse du méthanol.

## ART ANTERIEUR

Les gaz de synthèse sont généralement des mélanges gazeux comprenant du monoxyde de carbone CO, de l'hydrogène $H_2$, de la vapeur d'eau et du dioxyde de carbone $CO_2$. Ils peuvent être obtenus via la transformation du gaz naturel, du charbon, des résidus pétroliers et/ou de la biomasse par des procédés tels que le vaporeformage, le reformage autotherme, ou l'oxydation partielle, ou encore via la décomposition du méthanol, ou à partir de tout autre procédé connu de l'Homme du métier.

Les gaz de synthèse contiennent des composés chimiques intermédiaires pouvant être valorisés dans une multitude d'application telles que les installations de cogénération, et/ou dans les procédés de synthèse chimique tels que les procédés de synthèse du méthanol, de l'hydrogène, de l'ammoniac, du méthane ou bien encore en oxo-chimie. Les gaz de synthèse sont également mis en oeuvre dans les procédés de production d'hydrocarbures de synthèse obtenus par exemple par la réaction Fischer-Tropsch. L'ensemble des fractions GPL (Gaz de Pétrole Liquéfié), naphta, essence, kérosène, et gazole et bases lubrifiantes ou produits de spécialités qui en découlent se caractérise par un haut niveau de performances techniques et environnementales.

Cependant, les gaz de synthèse bruts obtenus selon les procédés dont ils sont issus contiennent, en outre, un certain nombre d'impuretés parmi lesquelles des composés soufrés tels que le sulfure d'hydrogène $H_2S$ et le sulfure de carbonyle COS, des composés azotés tels que l'ammoniac $NH_3$ et le cyanure d'hydrogène HCN, des composés halogénés, et des métaux qui sont généralement éliminés afin que le gaz n'en contienne plus qu'à des teneurs résiduelles, d'une part afin de ne pas altérer le bon fonctionnement des unités situées en aval et d'autre part de respecter les normes environnementales. Par ailleurs le dioxyde de carbone $CO_2$, bien que considéré comme inerte dans le gaz de synthèse pour la plupart de ses applications, est cependant présent en grande quantité et doit également être éliminé pour atteindre des teneurs de l'ordre de quelques pourcents.

Les impuretés présentes dans le gaz de synthèse non purifié peuvent entraîner une corrosion accélérée des installations dans lesquelles il est mis en oeuvre, telles que par exemple les turbines à gaz dans les unités de cogénération (ou "IGCC" pour "Integrated Gasification Combined Cycle" selon la terminologie anglo-saxonne), et sont susceptibles d'empoisonner les catalyseurs utilisés pour les procédés de synthèse chimique tels que ceux utilisés dans la synthèse Fischer-Tropsch ou du méthanol, ou encore d'atténuer les performances des matériaux utilisés dans les piles à combustibles. Des considérations environnementales imposent également l'élimination des impuretés présentes dans les gaz.

Dans le cas particulier de la synthèse Fischer-Tropsch, des spécifications sur le gaz de synthèse portent ainsi sur :

- les teneurs relatives en $H_2$ et CO, pour lesquelles un ratio $H_2$/CO est optimisé pour la synthèse d'hydrocarbures, et est généralement compris entre 1,5 et 2,5,
- la teneur en $CO_2$, devant être au plus de 5% afin que le fonctionnement de l'unité Fischer-Tropsch soit optimal,
- les teneurs en impuretés parmi lesquelles les composés soufrés, azotés, halogénés, métalliques susceptibles d'empoisonner le catalyseur : les spécifications requises en entrée de l'unité Fischer-Tropsch sont particulièrement sévères, les teneurs présentes dans le gaz de synthèse devant être généralement inférieures à 10 ppb masse pour les impuretés soufrées, inférieure à 10 ppb masse pour l'HCN, inférieure à 10 ppb masse pour $NH_3$, et inférieures à 10 ppb masse pour les impuretés halogénées [M.J.A. Tijmensen, A.P.C. Faaij, C.N. Hamelinck, M.R.M. van Hardeveld, "Exploration of the possibilities for production of Fischer-Tropsch liquids and power via biomass gasification", Biomass and Bioenergy, 2002, 23(2), 129-152].

Le gaz de synthèse brut, issu directement de la gazéification ou obtenu selon tout autre moyen connu de l'Homme du métier, doit ainsi subir des étapes de conditionnement de gaz visant à atteindre les spécifications requises pour l'application dans laquelle il est mis en oeuvre.

L'étape de production du gaz de synthèse mise en oeuvre conduit à une production d'hydrogène et de monoxyde

de carbone dont les teneurs relatives dépendent des charges utilisées, du procédé, et des conditions opératoires de transformation [C. Higman, M. van der Burgt, "Gasification", Gulf Publishing, 2008 ; C. Ratnasamy, J.P. Wagner, "Water gas shift catalysis", Catalysis Reviews, 2009, 51, 325-440]. Le gaz de synthèse produit peut alors présenter un rapport molaire $H_2/CO$ non optimal pour la réaction de Fischer-Tropsch, particulièrement lorsque le catalyseur utilisé est un catalyseur à base de cobalt qui nécessite avantageusement un rapport molaire $H_2/CO$ d'environ 2 pour orienter la synthèse vers la production de distillats moyens ["Fischer-Tropsch Technology", Studies in Surface Science and Catalysis, 2004, 152, 1-700].

Afin d'atteindre le rapport molaire $H_2/CO$ requis par la synthèse Fischer-Tropsch, le gaz de synthèse brut est généralement fractionné en deux flux, dont un est dirigé vers une section de conversion du monoxyde de carbone à la vapeur ("WGS" ou "Water Gas Shift" selon la terminologie anglo-saxonne) permettant de produire un flux gazeux riche en hydrogène et appauvri en monoxyde de carbone. Cette réaction produit cependant des quantités importantes de $CO_2$. Les proportions respectives entre le flux de gaz subissant la réaction de conversion du monoxyde de carbone à la vapeur et ladite partie complémentaire sont généralement déterminées afin d'obtenir après recombinaison un effluent présentant le rapport molaire $H_2/CO$ requis pour le bon fonctionnement du procédé Fischer-Tropsch, c'est-à-dire autour de 2. Le gaz obtenu après recombinaison contient ainsi une teneur en $CO_2$ plus importante par rapport au gaz de synthèse brut.

L'élimination des gaz acides contenus dans le flux de gaz recombiné, et en particulier le $CO_2$ et l'$H_2S$ est généralement conduite par lavage au solvant.

En particulier, la technique de lavage au solvant peut mettre en oeuvre des solutions aqueuses d'alcanolamines telles que la monoéthanolamine (MEA), la diéthanolamine (DEA), la diisopropanolamine (DIPA), la méthyldiéthanolamine (MDEA) ou la triéthanolamine (TEA) qui sont utilisées classiquement pour l'adoucissement du gaz naturel. Dans ce cas, les composés à éliminer ($H_2S$, $CO_2$) réagissent chimiquement avec le solvant [A. Kohl, R. Nielsen, "Gas Purification", Gulf Publishing, 1997].

Les teneurs en gaz acides dans le gaz de synthèse en aval de l'étape de lavage au solvant sont généralement au plus quelques ppmv de $H_2S$ (généralement moins de 10 ppmv), et au plus quelques pourcents de $CO_2$ (généralement moins de 7% volume). En raison des teneurs élevées en $CO_2$ contenues dans les gaz de synthèse bruts, des amines présentant des cinétiques d'absorption du $CO_2$ rapides sont généralement envisagées, à savoir des amines primaires ou secondaires telle que la monoéthanolamine (MEA), la diéthanolamine (DEA), ou des amines tertiaires activées à l'aide d'une amine secondaire. Par exemple le document US6852144 décrit une méthode d'élimination des composés acides présents dans des hydrocarbures gazeux. La méthode utilise une solution aqueuse d'amines absorbante comprenant un mélange eau-N-méthyldiéthanolamine ou eau-triéthanolamine et contenant une forte proportion d'un composé appartenant au groupe suivant : pipérazine et/ou méthylpipérazine et/ou morpholine.

Un des principaux inconvénients de ce type de schéma est la dégradation par le CO de l'amine secondaire utilisée comme un activateur de la cinétique d'absorption du $CO_2$. En effet, le CO peut entraîner la formation de sels de type formiates d'amines, stables à haute température, et de formamides par réaction avec les amines primaires et secondaires, produits de dégradation des amines. Ces composés sont susceptibles de s'accumuler dans le solvant, provoquer une diminution de son efficacité, et dans certains cas entraîner une corrosion accélérée des installations en raison des propriétés chélatantes de certains produits de dégradation. La formation de ces produits de dégradation altère les performances des procédés de lavage par des solutions aqueuses d'amines, ainsi que leur opérabilité (augmentation du taux de remplacement du solvant, dans certains cas retraitement et/ou réactivation du solvant, augmentation de la fréquence d'arrêts des unités, ...) et a un impact négatif sur le coût du procédé (dépenses d'investissement et d'exploitation).

Les amines tertiaires ne sont en revanche pas ou peu sensibles à la présence de CO, qui entraîne dans ce cas une dégradation réduite du solvant, mais présentent des cinétiques d'élimination de $CO_2$ limitée par rapport aux amines activées. La mise en oeuvre d'amines tertiaires pour le traitement de gaz de synthèse contenant de forte quantité de $CO_2$ nécessiterait des colonnes d'absorption de très grande hauteur.

Par ailleurs, lors de l'utilisation de ces solvants, la teneur minimale en $H_2S$ qu'il est possible d'obtenir après traitement du gaz est de quelques ppmv, l'élimination du COS reste partielle, de l'ordre de 80% pour une élimination poussée. L'HCN est également éliminé, au détriment toutefois d'une dégradation irréversible du solvant [A. Kohl, R. Nielsen, "Gas Purification", Gulf Publishing, 1997].

Un objet de la présente invention est de proposer un procédé de conditionnement et de purification des gaz de synthèse amélioré permettant d'obtenir un gaz de synthèse compatible avec son utilisation dans les procédés de synthèse de composés hydrocarbonés tels que le procédé Fischer-Tropsch.

Dans la présente invention, la demanderesse a mis en oeuvre un nouveau procédé qui permet de traiter séparément des flux de gaz de synthèse dans des enchainements spécifiques d'étapes et en fonction de leur composition et en particulier du point de vue des teneurs en $CO_2$ et CO.

Plus particulièrement, le procédé de l'invention intègre dans la chaîne du procédé une étape de fractionnement du gaz de synthèse brut à traiter en au moins deux effluents, une première partie et une partie complémentaire, dans lequel

ladite première partie est soumise à une étape de conversion du monoxyde de carbone à la vapeur; et ladite partie complémentaire est soumise à une étape d'hydrolyse catalytique du COS et de l'HCN ; les deux flux de gaz résultants sont ensuite chacun traités séparément lors de deux étapes dédiées d'élimination des gaz acides, tels que $CO_2$ et $H_2S$, par lavage à l'aide de solutions aqueuses d'amines, avant une étape de recombinaison des deux effluents traités.
Le procédé selon l'invention permet de réduire de manière significative la dégradation des solvants composés de solutions aqueuses d'amines, de diminuer le taux de remplacement des solvants, d'améliorer les performances et l'opérabilité du procédé tout en réduisant le flux de solvants nécessaire à l'élimination des gaz acides. En plus des avantages observés en termes de performances d'élimination des gaz acides, le procédé selon l'invention est économiquement plus intéressant en permettant également des gains significatifs sur les dépenses d'investissement et d'exploitation.

## DESCRIPTION SOMMAIRE DE L'INVENTION

En particulier, l'invention concerne un procédé de purification du gaz de synthèse comprenant au moins les étapes suivantes :

a) une étape de division du gaz de synthèse en au moins un premier et un deuxième flux de gaz de synthèse de même composition,
b1) une étape de conversion du monoxyde de carbone à la vapeur du premier flux de gaz de synthèse issu de l'étape a), pour produire un effluent gazeux comprenant au moins de l'hydrogène $H_2$ et du dioxyde de carbone $CO_2$,
b2) une étape d'élimination des gaz acides de l'effluent gazeux issu de l'étape b1) par mise en contact dudit effluent avec une solution aqueuse d'amines comprenant au moins une amine primaire et/ou secondaire, en mélange ou pas avec au moins une amine tertiaire ou une amine secondaire dite encombrée contenant au moins un carbone quaternaire en $\alpha$ (alpha) de l'azote ou deux carbones tertiaires en position $\alpha$ et $\alpha'$,
c1) une étape d'hydrolyse catalytique du COS et de l'HCN présents dans le deuxième flux de gaz de synthèse n'ayant pas subi la réaction de conversion du monoxyde de carbone à la vapeur,
c2) une étape d'élimination des gaz acides du flux de gaz de synthèse issu de l'étape d'hydrolyse catalytique de COS et HCN c1), par mise en contact dudit flux avec une solution aqueuse d'amines comprenant au moins une amine tertiaire,
d) la recombinaison d'au moins une partie des effluents gazeux issus des étapes b2) et c2) pour obtenir un gaz de synthèse purifié.

Le gaz de synthèse purifié ainsi obtenu comprend moins de 5% volume de dioxyde de carbone $CO_2$, de préférence moins de 2% volume de $CO_2$, et moins de 50 ppmv de $H_2S$, de préférence moins de 10 ppmv de $H_2S$, de manière préférée moins de 5 ppmv de $H_2S$, de manière très préférée moins de 1 ppmv de $H_2S$ et également des quantités résiduelles de COS et HCN, et de préférence moins de 20 ppmv de COS, de manière préférée moins de 10 ppmv de COS, de manière très préférée moins de 5 ppmv de COS, et de manière encore plus préférée moins de 2 ppmv de COS, et moins de 10 ppmv de HCN, de préférence moins de 5 ppmv de HCN, de manière préférée moins de 1 ppmv de HCN.
En outre le gaz de synthèse issu de l'étape d) de recombinaison contient du $H_2$ et du CO, et présente avantageusement un rapport molaire $H_2$/CO de préférence compris entre 0,5 et 4, de préférence entre 1 et 3, de manière plus préférée entre 1,5 et 2,5.
Un avantage de la présente invention réside dans le fait de traiter séparément des flux de gaz de synthèse dans des enchainements spécifiques d'étapes et en fonction de leur différence de composition, en particulier de leur différence de teneurs en CO et $CO_2$.
Un avantage de la présente invention est de permettre de réduire de manière significative la dégradation des solutions aqueuses d'amines mises en oeuvre dans les étapes d'élimination des gaz acides, en particulier en minimisant le contact entre CO et amines primaires et secondaires, et en diminuant fortement le taux de formation des produits de dégradation tels que par exemple les formamides et les sels d'amines stables en température.
Un avantage de la présente invention est de fournir un procédé aux performances et à l'opérabilité améliorées, car permettant entre autre de diminuer le taux de remplacement des solvants.
Un avantage de la présente invention est de fournir un procédé à coût réduit grâce au traitement séparés des flux de gaz de synthèse permettant une élimination plus efficace et plus performante de l'$H_2S$, du COS et de l'HCN, et ainsi une réduction globale des flux d'amines nécessaires, une réduction de la taille des unités de traitement, et ainsi un gain sur les dépenses d'investissement et d'exploitation.
Par ailleurs, le procédé selon la présente invention permet l'élimination d'une grande quantité d'impuretés tels que l'$H_2S$, le COS, le $CO_2$, l'HCN, le $NH_3$ et les métaux éventuellement présents dans les gaz de synthèse.

## DESCRIPTION DETAILLEE DE L'INVENTION

Le gaz de synthèse traité dans le procédé de l'invention peut avantageusement être obtenu par la transformation du gaz naturel, du charbon ou de la biomasse, par des procédés tels que le vaporeformage, le reformage autotherme, ou l'oxydation partielle, ou encore par la décomposition du méthanol, ou à partir de tout autre procédé connu de l'Homme du métier.

En outre, le gaz de synthèse peut également être obtenu à partir d'une charge comprenant au moins une fraction de biomasse et éventuellement au moins une fraction d'une autre charge. On entend par biomasse tout type de biomasse, de préférence de la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.

Le gaz de synthèse peut également être produit à partir d'une charge comprenant en outre au moins une fraction d'une autre charge, de préférence au moins une fraction de charge hydrocarbonée gazeuse, solide et/ou liquide ("co-processing" selon la terminologie anglo-saxonne). Ladite fraction de charge hydrocarbonée est entendue dans le cadre de la présente invention comme étant une fraction de charge pouvant avantageusement contenir au moins du charbon, du coke de pétrole (petcoke selon la terminologie anglo-saxonne), du gaz naturel, des résidus pétroliers, des pétroles bruts, des pétroles bruts étêtés, des huiles désasphaltées, des asphaltes de désasphaltage, des dérivés de procédés de conversion du pétrole (comme par exemple : HCO/Slurry de FCC, GO lourd/VGO de coking, résidu de viscoréduction ou procédé thermique similaires, etc....), des sables bitumineux ou leurs dérivés, des gaz de schistes et des schistes bitumineux ou leurs dérivés, de la biomasse liquide (comme par exemple : l'huile de colza, l'huile de palme, l'huile de pyrolyse, ...), de la biomasse en slurry selon la terminologie anglo-saxone correspondant à un mélange de biomasse liquide avec une charge hydrocarbonée solide. Selon le procédé de l'invention, ladite fraction de charge hydrocarbonée peut être une fraction de charge hydrocarbonée gazeuse, solide, liquide ou leur mélange.

La charge du procédé selon l'invention peut donc être une charge comprenant au moins une fraction de biomasse solide, et éventuellement au moins une fraction d'une autre charge gazeuse, solide ou liquide, seul ou en mélange.

La composition du gaz de synthèse brut est fonction de la charge et du procédé utilisés pour la préparation du gaz. Le gaz de synthèse brut contient généralement du monoxyde de carbone CO, de l'hydrogène $H_2$, du dioxyde de carbone $CO_2$, et de l'eau. En particulier, le gaz de synthèse contient entre 5 et 65% volume de CO, de préférence entre 10 et 50% volume de CO, de préférence entre 12 et 45% volume de CO, et entre 1 et 65% volume de $H_2$, de préférence entre 3 et 50% volume de $H_2$, de préférence entre 5 et 35% volume de $H_2$, et entre 1 et 50% volume de $CO_2$, de préférence entre 5 et 45% volume de $CO_2$, de préférence entre 10 et 40% volume de $CO_2$.

En général un gaz de synthèse contient de nombreuses impuretés telles que des composés soufrés (tels que $H_2S$, COS, mercaptans), azotés (tels que $NH_3$, HCN), halogénés (HF, HCl, HBr, HI), et également des métaux, tel que par exemple le mercure, le sélénium et des métaux carbonyles.

Les teneurs en impuretés dans le gaz de synthèse brut sont fonction de la charge et du procédé utilisés pour la préparation du gaz. Plus particulièrement, les teneurs en composés soufrés peuvent être comprises entre 20 et 20000 ppmv, voire de 50 à 15000 ppmv. Les teneurs en composés azotés peuvent être comprises entre 20 et 20000 ppmv, voire de 50 à 15000 ppmv.

### a) Étape a) de fractionnement du gaz de synthèse brut

Conformément à l'invention, le gaz de synthèse est soumis à une étape a) de fractionnement ou de division en au moins deux effluents de même composition, une première partie et une partie complémentaire soumises aux étapes suivantes :

- une étape b1) de conversion du monoxyde de carbone à la vapeur réalisée sur la dite première partie de l'effluent issu de l'étape a) ;
- une étape c1) d'hydrolyse catalytique des composés COS et HCN contenus dans ladite partie complémentaire de l'effluent issu de l'étape a) en $H_2S$ et $NH_3$.

Selon le procédé de l'invention, les proportions respectives desdits flux issus de l'étape a) de division sont avantageusement déterminées afin d'obtenir un effluent recombiné, lequel, après d'éventuelles étapes de purification visant à éliminer les impuretés résiduelles, alimente l'étape de synthèse Fischer-Tropsch, et présente un rapport molaire $H_2$/CO de préférence compris entre 0,5 et 4, de préférence entre 1 et 3, de manière plus préférée entre 1,5 et 2,5.

De préférence, le premier flux représente au moins 20 à 80% volume, de préférence 30 à 70% volume, de manière préférée 40 à 60% volume du flux de gaz de synthèse entrant dans ladite étape a).

**b1) Étape b1) de conversion du monoxyde de carbone à la vapeur**

Ladite étape b1) permet de produire un effluent gazeux riche en $H_2$ et appauvri en monoxyde de carbone CO. Cette réaction produit cependant des quantités importantes de $CO_2$.

L'étape de production du gaz de synthèse conduit généralement à une production d'hydrogène et de monoxyde de carbone dans un rapport molaire $H_2$/CO non optimal pour la réaction de Fischer-Tropsch, particulièrement lorsque le catalyseur utilisé est un catalyseur à base de cobalt qui nécessite avantageusement un rapport molaire $H_2$/CO optimal d'environ 2 pour orienter la synthèse vers la production de distillats moyens.

Afin d'atteindre le rapport molaire $H_2$/CO requis par la synthèse Fischer-Tropsch, la première partie de l'effluent issu de l'étape a) de fractionnement est selon l'invention dirigée vers une section de conversion du monoxyde de carbone à la vapeur b1) permettant de produire un flux gazeux enrichi en hydrogène et dioxyde de carbone et appauvri en monoxyde de carbone selon la réaction suivante :

$$CO + H_2O \rightarrow CO_2 + H_2$$

De manière préférée, l'étape b1) est réalisée à une température d'entrée comprise entre 150 et 280°C, de préférence entre 200 et 280°C.

Avantageusement, l'étape b1) de réaction de conversion du monoxyde de carbone à la vapeur est réalisée à une pression absolue comprise entre 20 et 120 bar, de préférence entre 25 et 60 bar, et plus préférentiellement entre 30 et 50 bar ; à une vitesse volumique horaire VVH (volume de charge/volume de catalyseur/heure) comprise entre 1000 et 10000 $h^{-1}$, de préférence entre 1000 et 9000 $h^{-1}$ et de manière plus préférée entre 1500 et 8500 $h^{-1}$; à une température comprise entre 150 et 550°C, de préférence entre 200 et 550°C, et de manière plus préférée entre 250 et 500°C.

Le catalyseur mis en oeuvre dans cette étape b1) est un catalyseur comprenant au moins un élément du groupe VIII et/ou au moins un élément du groupe VIB de la classification périodique de Mendeleïev (le groupe VIII correspond au groupe 8, 9 et 10, et le groupe VIB au groupe 6 selon la nouvelle notation de la classification périodique des éléments : Handbook of Chemistry and Physics, 81ème édition, 2000-2001). De préférence, le catalyseur est un catalyseur comprenant du cobalt sulfuré et/ou du molybdène sulfuré. Le support du catalyseur est habituellement un solide poreux choisi dans le groupe constitué par les alumines, la silice, les silices alumines. Préférentiellement, le support du catalyseur est l'alumine. Le catalyseur utilisé peut être promu avec un promoteur alcalin ou alcalino-terreux. La réaction de conversion du monoxyde de carbone permet d'augmenter considérablement la teneur en hydrogène dans l'effluent sortant.

Si besoin, un apport d'eau sous forme liquide, de préférence sous forme vapeur et préférentiellement sous forme de vapeur surchauffée pourra être effectué en amont de l'étape de conversion du monoxyde de carbone à la vapeur pour ajuster le ratio $H_2O$/CO à l'entré de l'unité de l'étape b1). Avantageusement, l'étape b1) est mise en oeuvre avec une ratio $H_2O$/CO compris entre 0,5 et 100, de manière préférée entre 0,5 et 25, de manière plus préférée entre 1,5 et 10. En raison du caractère exothermique de la réaction de conversion du monoxyde de carbone à la vapeur, l'effluent gazeux issu de cette étape présente une température comprise entre 250 et 550°C.

Avantageusement, le catalyseur utilisé lors de l'étape de conversion du monoxyde de carbone à la vapeur b1) permet également de favoriser les réactions d'hydrolyse de l'oxysulfure de carbone (COS) et du cyanure d'hydrogène (HCN) en $H_2S$ et $NH_3$. Cette étape permet l'élimination partielle du COS et de l'HCN qui sont des poisons pour le catalyseur de synthèse Fischer-Tropsch. Par ailleurs l'hydrolyse du COS et de l'HCN lors de l'étape de conversion du monoxyde de carbone à la vapeur b1) permet une élimination plus poussée du COS et de l'HCN, lorsque combinée à l'étape d'élimination des gaz acides b2) située en aval. De plus, en réalisant l'hydrolyse de l'HCN lors de cette étape, le solvant mis en oeuvre dans l'étape b2) située en aval est également protégé d'une dégradation des amines réactives, laquelle le cas échéant pourrait être occasionnée par la présence de HCN.

Conformément à l'invention, l'étape b1) permet l'obtention d'un effluent gazeux comprenant au moins de l'hydrogène $H_2$ et du dioxyde de carbone $CO_2$. Ledit effluent contient avantageusement entre 5 et 95% volume de $H_2$, de préférence entre 10 et 80% volume de $H_2$, de préférence entre 20 et 60% volume de $H_2$, et contient entre 5 et 60% volume de dioxyde de carbone $CO_2$, de préférence entre 10 et 50% volume de $CO_2$, de préférence entre 15 et 45% volume de $CO_2$.
Ledit effluent contient également avantageusement moins de 15% volume de monoxyde de carbone CO, de préférence moins de 10% volume de CO, de manière plus préférée moins de 5% volume de CO, de manière encore plus préférée moins de 3% volume de CO.

Avantageusement, l'effluent en sortie de l'étape b1) de conversion du monoxyde de carbone à la vapeur contient également moins de 100 ppmv de COS, de manière préférée moins de 80 ppmv de COS, et de manière plus préférée moins de 60 ppmv de COS, et moins de 10 ppmv de HCN, de manière préférée moins de 5 ppmv de HCN, et de manière plus préférée moins de 2 ppmv de HCN.

Dans une variante du procédé selon l'invention, l'effluent gazeux issu de l'étape b1) de conversion du monoxyde

de carbone à la vapeur est envoyé dans une étape d'hydrolyse catalytique du COS et HCN en $H_2S$ et $NH_3$ (étape b1'), de préférence après refroidissement à une température comprise entre 100 et 400°C, de manière préférée entre 200 et 350°C. L'étape b1') est alors conduite selon les mêmes conditions opératoires que celles de l'étape d'hydrolyse catalytique c1) décrite plus loin.

Avantageusement, l'effluent en sortie de l'unité d'hydrolyse de l'étape b1') contient moins de 50 ppmv de COS, de manière préférée moins de 25 ppmv de COS, et de manière plus préférée moins de 10 ppmv de COS, et moins de 5 ppmv de HCN, de manière préférée moins de 1 ppmv de HCN, et de manière plus préférée moins de 0,5 ppmv de HCN.

Selon une autre variante, l'étape b1') d'hydrolyse catalytique des composés COS et HCN présents dans le premier flux de gaz de synthèse issu de l'étape b1) peut avantageusement être mise en oeuvre dans l'étape b2) d'élimination des gaz acides dudit premier flux de gaz de synthèse. Ce mode de réalisation est décrit dans le brevet FR 2950265.

**Lavage à l'eau de l'effluent issu de l'étape b1)**

Dans un mode de réalisation préféré, l'effluent issus de l'étape b1) est lavé à l'eau. Cette étape de lavage à l'eau présente l'avantage d'éliminer les impuretés telles que $NH_3$ et HCl solubles dans l'eau et particulièrement néfastes à l'opération de l'étape b2) d'élimination des gaz acides.

**b2) Étape b2) d'élimination des gaz acides de l'effluent gazeux issu de l'étape b1)**

Conformément à l'invention, une étape d'élimination des gaz acides de l'effluent gazeux issu de l'étape b1) de conversion du monoxyde de carbone à la vapeur et ayant éventuellement subi l'étape b1') d'hydrolyse catalytique de COS et HCN est mise en oeuvre par mise en contact dudit effluent avec une solution aqueuse d'amines comprenant au moins une amine primaire et/ou secondaire, en mélange ou pas avec au moins une amine tertiaire ou secondaire stériquement encombrée.

On entend par gaz acides notamment les composés soufrés $H_2S$ et COS, et le $CO_2$ restant dans l'effluent gazeux issu de l'étape b1).

La composition de l'effluent gazeux issu de l'étape b1), enrichi en $H_2$ et $CO_2$ et appauvri en monoxyde de carbone CO, permet l'utilisation dans ladite étape b2) d'une solution aqueuse d'amines adaptée. En particulier, une solution aqueuse d'amines assurant une élimination poussée du $CO_2$ et du COS grâce à des cinétiques de réaction rapides mais sensible à la présence de CO peut être utilisée. De tels solvants sont constitués de solutions aqueuses d'amines primaire et/ou secondaire, éventuellement en mélange avec une amine tertiaire ou une amine secondaire stériquement encombrée.

Dans la présente description, on entend par "amine tertiaire" toute molécule comportant une ou plusieurs fonctions amines et dont toutes les fonctions amines sont tertiaires.

Dans la présente description, on entend par "amine secondaire encombrée" toute molécule comportant une ou plusieurs fonctions amines et dont les fonctions amines sont tertiaires ou secondaires encombrées, l'une au moins étant secondaire et caractérisée par un encombrement stérique.

Par "encombrement" de la fonction amine secondaire, on entend soit la présence d'au moins un carbone quaternaire en $\alpha$ (alpha) de l'azote, soit la présence de deux carbones tertiaires en position $\alpha$ et $\alpha'$. Les positions a et $\alpha'$ de l'azote d'une amine secondaire sont définies telles que sur la représentation ci-après :

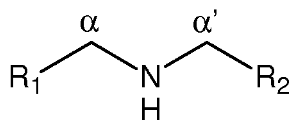

De préférence, la ou les amines primaires sont choisies parmi la monoéthanolamine, l'aminoéthyléthanolamine, la diglycolamine, la 2-amino-2-méthyl-1-propanol et ses dérivés non N substitués, seule ou en mélange.

De préférence, la ou les amines secondaires sont choisies parmi la diéthanolamine (DEA), la diisopropanolamine, la pipérazine et ses dérivés dans lesquels au moins un atome d'azote n'est pas substitué, la morpholine et ses dérivés non N substitués, la pipéridine et ses dérivés non N substitués, la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol, seule ou en mélange.

Dans le cas où ladite étape b2) opère en présence d'une solution aqueuse d'amines comprenant au moins une amine primaire et/ou secondaire, en mélange avec au moins une amine tertiaire ou une amine secondaire encombrée, la ou les amines primaires et/ou secondaires sont appelées "activateurs". Ce type de formulation permet d'optimiser les capacités d'absorption des gaz acides ainsi que les cinétiques d'absorption du $CO_2$ et du COS. Les cinétiques d'absorption du $CO_2$ et du COS étant maximisées par l'emploi d'une amine primaire ou d'une amine secondaire, l'élimination

des gaz acides de l'effluent gazeux sera particulièrement favorisée.

De préférence, la ou les amines tertiaires sont choisies parmi la méthyldiéthanolamine (MDEA), la triéthanolamine, l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl)-pipérazine, la 1-méthyl-4-hydroxy-pipéridine, la 1-méthyl-2-hydroxyméthyl-pipéridine, la tertiobutyldiéthanolamine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane, seule ou en mélange.

De préférence, la ou les amines secondaires encombrées sont choisies parmi la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol.

Les amines primaires ou secondaires appelées "activateur" peuvent être par exemple de préférence choisies parmi les molécules suivantes :

- Monoéthanolamine,
- Diéthanolamine,
- N-butyléthanolamine,
- Aminoéthyléthanolamine,
- Diglycolamine,
- Pipérazine,
- 1-Méthylpipérazine,
- 2-Méthylpipérazine,
- N-(2-hydroxyéthyl)pipérazine,
- N-(2-aminoéthyl)pipérazine,
- Morpholine,
- 3-(méthylamino)propylamine,
- 1,6-hexanediamine et tous ses dérivés diversement N-alkylés tels par exemple la N,N'-diméthyl-1,6-hexanediamine, la N-méthyl-1,6-hexanediamine ou la N,N',N'-triméthyl-1,6-hexanediamine.

Selon un premier mode de réalisation, la solution aqueuse d'amines comprend entre 10% et 90% masse d'une amine primaire, de préférence entre 20% et 60% masse, de manière très préférée entre 25% et 50% masse ; la solution comprend entre 10% et 90% masse d'eau, de préférence entre 40% et 80% masse d'eau, de manière très préférée de 50% à 75% masse d'eau.

Selon un deuxième mode de réalisation, la solution aqueuse d'amines comprend entre 10% et 90% masse d'une amine secondaire, de préférence entre 20% et 60% masse, de manière très préférée entre 25% et 50% masse ; la solution comprend entre 10% et 90% masse d'eau, de préférence entre 40% et 80% masse d'eau, de manière très préférée de 50% à 75% masse d'eau.

Selon un troisième mode de réalisation, la solution aqueuse d'amines comprend entre 10% et 90% masse d'une amine tertiaire, de préférence entre 20% et 60% masse, de manière très préférée entre 25% et 50% masse ; la solution comprend entre 10 % et 90 % masse d'eau, de préférence entre 40% et 80% masse d'eau, de manière très préférée de 50% à 75% masse d'eau ; et la solution comprend de 0,5% à 30% masse dudit activateur, de préférence de 0,5% à 15% masse, de manière très préférée de 0,5% à 10% masse.

Selon un quatrième mode de réalisation, la solution aqueuse d'amines comprend entre 10% et 90% masse d'une amine secondaire encombrée, de préférence entre 20% et 60% masse, de manière très préférée entre 25% et 50% masse ; la solution comprend entre 10% et 90% masse d'eau, de préférence entre 40% et 80% masse d'eau, de manière très préférée de 50% à 75% masse d'eau ; et la solution comprend de 0,5% à 30% masse dudit activateur, de préférence de 0,5% à 15% masse, de manière très préférée de 0,5% à 10% masse.

L'étape b2) d'élimination des gaz acides comporte une première étape d'absorption des composés acides du gaz de synthèse à traiter par mise en contact de ce gaz avec le solvant dans un absorbeur opérant à la pression du gaz à traiter, suivie d'une étape de régénération du solvant, opérant généralement à une pression légèrement supérieure à la pression atmosphérique.

Ladite étape d'extraction des gaz acides peut avantageusement être mise en oeuvre dans une colonne d'absorption

des gaz acides. La colonne d'absorption peut avantageusement être équipée de tout type d'internes favorisant le contact gaz/liquide connus de l'Homme du métier tels que des plateaux, des garnissages vrac, des garnissages structurés, le solvant étant distribué en haut de ladite colonne et le gaz circulant à contre-courant dans celle-ci. La dite étape de régénération du solvant peut avantageusement être mise en oeuvre afin de réduire la consommation de solvant dans l'unité qui ainsi peut être régénéré, et s'effectue généralement dans une colonne équipée au fond d'un rebouilleur et en tête d'un condenseur permettant de refroidir les composés acides libérés par la régénération. Cette étape de régénération thermique opère généralement à une pression légèrement supérieure à la pression atmosphérique, généralement entre 1 et 5 bar, préférentiellement entre 1,5 et 3 bar. La température en fond de colonne est généralement comprise entre 100 et 160°C, de manière plus préférée entre 100 et 140°C. La colonne de régénération peut avantageusement être équipée de tout type d'internes favorisant le contact gaz/liquide connus de l'Homme du métier tels que des plateaux, des garnissages vrac, des garnissages structurés. Cette étape de régénération peut être avantageusement réalisée en deux étapes afin d'éliminer d'une part un flux gazeux riche en $CO_2$ et d'autre part un flux gazeux riche en $H_2S$.
Selon un autre mode de réalisation cette étape de régénération peut avantageusement comprendre une étape de régénération partielle du solvant par détente à une pression absolue légèrement supérieure à la pression atmosphérique, généralement entre 1 et 10 bar, préférentiellement entre 1 et 5 bar, le solvant partiellement régénéré pouvant être réintroduit dans la colonne d'absorption à un niveau intermédiaire entre la tête et le fond de la colonne.

L'étape d'absorption des gaz acides est avantageusement opérée à une pression absolue comprise entre 20 et 120 bar, de préférence entre 25 et 60 bar, et de manière encore plus préférée entre 30 et 50 bar. L'étape d'absorption des gaz acides est avantageusement réalisée à une température comprise entre 20 et 100°C, de préférence entre 30 et 80°C.

L'étape b1) permet l'obtention d'un effluent gazeux l'effluent gazeux appauvri en $H_2S$ et $CO_2$. De préférence, ledit effluent gazeux comprend moins de 5% volume de dioxyde de carbone $CO_2$, de préférence moins de 1% volume de $CO_2$, et moins de 50 ppmv de $H_2S$, de préférence moins de 10 ppmv de $H_2S$, de préférence moins de 5 ppmv de $H_2S$, de préférence moins de 1 ppmv de $H_2S$.
Ledit effluent gazeux issu de ladite étape b2) contient également avantageusement moins de 20 ppmv de COS, de préférence moins de 10 ppmv de COS, de préférence moins de 5 ppmv de COS, de préférence moins de 2 ppmv de COS, et moins de 10 ppmv de HCN, de préférence moins de 5 ppmv de HCN, de préférence moins de 1 ppmv de HCN.

Les teneurs relatives en CO et $H_2$ dans l'effluent gazeux sont identiques à celles du flux de gaz issu de l'étape b1) qui alimente l'étape b2).

### c1) Étape c1) d'hydrolyse catalytique des composés COS et HCN

Selon le procédé de l'invention, la partie complémentaire issue de l'étape a) est soumise à une étape d'hydrolyse catalytique du COS et de l'HCN en $H_2S$ et $NH_3$ (étape c1). Cette étape permet l'élimination partielle du COS et de l'HCN qui sont des poisons pour le catalyseur de synthèse Fischer-Tropsch. Par ailleurs la mise en oeuvre de l'étape d'hydrolyse catalytique c1) permet une élimination plus poussée du COS et de l'HCN, lorsque combinée à l'étape d'élimination des gaz acides c2) située en aval. De plus, en réalisant l'hydrolyse de l'HCN lors de cette étape, le solvant mis en oeuvre dans l'étape c2) est également protégé d'une dégradation des amines réactives, laquelle le cas échéant pourrait être occasionnée par la présence de HCN.

L'étape c1) d'hydrolyse catalytique de l'oxysulfure de carbone (COS) et du cyanure d'hydrogène (HCN) est selon l'invention avantageusement mise en oeuvre en présence d'un catalyseur contenant un composé à base de platine, ou un oxyde d'un élément choisi dans le groupe comprenant le titane, le zirconium, l'aluminium, le chrome, le zinc, ou leur mélange.

De manière préférée, le catalyseur d'hydrolyse est un catalyseur à base d'oxyde de titane. Le catalyseur utilisé peut également contenir au moins des métaux alcalins, alcalino-terreux et/ou des terres rares, issus par exemple de précurseurs tels que la potasse, la soude, le carbonate de sodium ou de baryum, le bicarbonate de sodium ou de baryum, le sulfate de calcium, l'acétate de sodium ou de baryum, l'oxalate de sodium ou de baryum. L'étape d'hydrolyse est avantageusement réalisée à une température comprise entre 100 et 400°C, de préférence entre 200 et 350°C.

Avantageusement, l'étape c1) d'hydrolyse catalytique de COS et HCN est réalisée à une pression absolue comprise entre 20 et 120 bar, de préférence entre 25 et 60 bar, et plus préférentiellement entre 30 et 50 bar.

Le gaz de synthèse en sortie de l'unité d'hydrolyse de l'étape c1) contient avantageusement entre 5 et 65% volume de CO, de préférence entre 10 et 50% volume de CO, de préférence entre 12 et 45% volume de CO, et entre 1 et 65% volume de $H_2$, de préférence entre 3 et 50% volume de $H_2$, de préférence entre 5 et 35% volume de $H_2$, et entre 1 et 50% volume de $CO_2$, de préférence entre 5 et 45% volume de $CO_2$, de préférence entre 10 et 40% volume de $CO_2$.

Ledit effluent gazeux en sortie de l'unité d'hydrolyse de l'étape c1) contient également avantageusement moins de 25 ppmv de COS, de manière préférée moins de 10 ppmv de COS, et de manière plus préférée moins de 5 ppmv de COS, et moins de 5 ppmv de HCN, de manière préférée moins de 1 ppmv de HCN, et de manière plus préférée

moins de 0,5 ppmv de HCN.

Selon une autre variante, l'étape c1) d'hydrolyse catalytique des composés COS et HCN présents dans le deuxième flux de gaz de synthèse issu de l'étape a) peut avantageusement être mise en oeuvre dans l'étape c2) d'élimination des gaz acides dudit deuxième flux de gaz de synthèse. Ce mode de réalisation est décrit dans le brevet FR 2950265.

## Lavage à l'eau l'effluent issu de l'étape c1)

Dans un mode de réalisation préféré, l'effluent issus de l'étape c1) est lavé à l'eau. Cette étape de lavage à l'eau présente l'avantage d'éliminer les impuretés telles que $NH_3$ et HCl solubles dans l'eau et particulièrement néfastes à l'opération de l'étape c2) d'élimination des gaz acides.

## c2) Étape c2) d'élimination des gaz acides du flux de gaz de synthèse issu de l'étape c1) d'hydrolyse de COS et HCN

Conformément à l'invention, en parallèle aux étapes b1) et b2), le deuxième flux de gaz de synthèse issu de l'étape c1) et plus riche en CO subit une étape d'élimination des gaz acides par mise en contact dudit flux avec une solution aqueuse d'amines comprenant au moins une amine tertiaire.

Ladite étape c2) permet de produire un effluent gazeux appauvri en $H_2S$ et $CO_2$. De préférence, ledit effluent gazeux issu de l'étape c2) comprend moins de 10% volume de $CO_2$, de préférence moins de 7% volume de $CO_2$, et moins de 50 ppmv de $H_2S$, de préférence moins de 10 ppmv de $H_2S$, de préférence moins de 5 ppmv de $H_2S$, de préférence moins de 1 ppmv de $H_2S$.

Ledit effluent gazeux issu de ladite étape c2) contient également avantageusementmoins de 20 ppmv de COS, de préférence moins de 10 ppmv de COS, de préférence moins de 5 ppmv de COS, de préférence moins de 2 ppmv de COS, et moins de 10 ppmv de HCN, de préférence moins de 5 ppmv de HCN, de préférence moins de 1 ppmv de HCN.

Les teneurs relatives en CO et $H_2$ dans l'effluent gazeux sont identiques à celles du flux de gaz issu de l'étape c1) qui alimente l'étape c2).

La composition du deuxième flux de gaz de synthèse issu de l'étape c1), riche en CO, nécessite l'utilisation dans ladite étape c2) d'une solution aqueuses d'amines adaptée. En particulier, une solution aqueuse d'amines peu ou pas sensibles à la présence de CO doit être utilisée. Ainsi une solution aqueuse d'amines tertiaires ne permettant pas de réaction directe avec le CO sera privilégiée.

De préférence, la ou les amines tertiaires sont choisies parmi la méthyldiéthanolamine (MDEA), la triéthanolamine, l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl)-pipérazine, la 1-méthyl-4-hydroxy-pipéridine, la 1-méthyl-2-hydroxyméthyl-pipéridine, la tertiobutyldiéthanolamine, la 1,2-bis-(2-diméthylaminoéthoxy)-éthane, le Bis(diméthylamino-3-propyl)éther, le Bis(diéthylamino-3-propyl)éther, le

(diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane, seule ou en mélange.

Selon un mode de réalisation préféré, la solution aqueuse d'amines comprend entre 10% et 90% masse d'une amine tertiaire, de préférence entre 20% et 60% masse, de manière très préférée entre 25% et 50% masse ; la solution comprend entre 10% et 90% masse d'eau, de préférence entre 40% et 80% masse d'eau, de manière très préférée de 50% à 75% masse d'eau.

La cinétique d'absorption du $CO_2$ dans une solution aqueuse d'amine tertiaire étant assez lente, une sélectivité entre l'absorption de l'$H_2S$ et l'absorption du $CO_2$ est obtenue, ce qui permet d'éliminer substantiellement l'$H_2S$.

L'étape c2) d'élimination des gaz acides comporte une première étape d'absorption des composés acides du gaz de synthèse à traiter par mise en contact de ce gaz avec le solvant dans un absorbeur opérant à la pression du gaz à traiter, suivie d'une étape de régénération du solvant, opérant généralement à une pression légèrement supérieure à la pression atmosphérique.

Ladite étape d'extraction des gaz acides peut avantageusement être mise en oeuvre dans une colonne d'absorption des gaz acides. La colonne d'absorption peut avantageusement être équipée de tout type d'internes favorisant le contact gaz/liquide connus de l'Homme du métier tels que des plateaux, des garnissages vrac, des garnissages structurés, le solvant étant distribué en haut de ladite colonne et le gaz circulant à contre-courant dans celle-ci. La dite étape de

régénération du solvant peut avantageusement être mise en oeuvre afin de réduire la consommation de solvant dans l'unité qui ainsi peut être régénéré, et s'effectue généralement dans une colonne équipée au fond d'un rebouilleur et en tête d'un condenseur permettant de refroidir les composés acides libérés par la régénération. Cette étape de régénération thermique opère généralement à une pression légèrement supérieure à la pression atmosphérique, généralement entre 1 et 5 bar, préférentiellement entre 1,5 et 3 bar. La température en fond de colonne est généralement comprise entre 100 et 160°C, de manière plus préférée entre 100 et 140°C. La colonne de régénération peut avantageusement être équipée de tout type d'internes favorisant le contact gaz/liquide connus de l'Homme du métier tels que des plateaux, des garnissages vrac, des garnissages structurés. Cette étape de régénération peut être avantageusement réalisée en deux étapes afin d'éliminer d'une part un flux gazeux riche en $CO_2$ et d'autre part un flux gazeux riche en $H_2S$.
Selon un autre mode de réalisation cette étape de régénération peut avantageusement comprendre une étape de régénération partielle du solvant par détente à une pression absolue légèrement supérieure à la pression atmosphérique, généralement entre 1 et 10 bar, préférentiellement entre 1 et 5 bar, le solvant partiellement régénéré pouvant être réintroduit dans la colonne d'absorption à un niveau intermédiaire entre la tête et le fond de la colonne.

L'étape d'absorption des gaz acides est avantageusement opérée à une pression absolue comprise entre 20 et 120 bar, de préférence entre 25 et 60 bar, et de manière encore plus préférée entre 30 et 50 bar. L'étape d'absorption des gaz acides est avantageusement réalisée à une température comprise entre 20 et 100°C, de préférence entre 30 et 80°C.

Selon un mode de réalisation préféré, la solution aqueuse d'amines utilisée à l'étape d'absorption peut être déjà partiellement chargée en gaz acides, si elle provient notamment de l'étape d'absorption d'une unité d'enrichissement de gaz acide ou d'une unité de traitement des gaz de queue de Claus.

Selon un autre mode de réalisation préféré, l'étape de régénération peut être avantageusement combinée avec une étape de régénération d'une unité d'enrichissement de gaz acide ou d'une unité de traitement des gaz de queue de Claus.

## d) Étape d) de recombinaison des effluents

Conformément à l'invention, au moins une partie et de préférence la totalité des effluents gazeux issus des étapes b2) et c2) sont recombinés pour obtenir un gaz de synthèse purifié.

Le gaz de synthèse purifié issu de l'étape d) de recombinaison comprend moins de 5% volume de dioxyde de carbone $CO_2$, de préférence moins de 2% volume de $CO_2$.

Avantageusement, le gaz de synthèse purifié issu de l'étape d) de recombinaison contient moins de 50 ppmv de $H_2S$, de préférence moins de 10 ppmv de $H_2S$, de préférence moins de 5 ppmv de $H_2S$, de préférence moins de 1 ppmv de $H_2S$, et comprend également des quantités résiduelles de COS et HCN, à savoir moins de 20 ppmv de COS, de préférence moins de 10 ppmv de COS, de préférence moins de 5 ppmv de COS, de préférence moins de 2 ppmv de COS, et moins de 10 ppmv de HCN, de préférence moins de 5 ppmv de HCN, de préférence moins de 1 ppmv de HCN.

En outre le gaz de synthèse issu de l'étape d) de recombinaison contient du $H_2$ et du CO, et présente avantageusement un rapport molaire $H_2/CO$ de préférence compris entre 0,5 et 4, de préférence entre 1 et 3, de manière plus préférée entre 1,5 et 2,5.

## e) Étape de purification finale

Le gaz de synthèse purifié issu de l'étape d) de recombinaison peut encore contenir des impuretés qu'il peut convenir d'éliminer en fonction des spécifications des procédés situés en aval. En particulier, le gaz de synthèse issu de l'étape d) contient moins de 50 ppmv de $H_2S$, de préférence moins de 10 ppmv de $H_2S$, de manière préférée moins de 5 ppmv de $H_2S$, de manière très préférée moins de 1 ppmv de $H_2S$, et comprend également des quantités résiduelles de COS et HCN, de préférence moins de 20 ppmv de COS, de manière préférée moins de 10 ppmv de COS, de manière très préférée moins de 5 ppmv de COS, de manière plus préférée moins de 2 ppmv de COS, et moins de 10 ppmv de HCN, de préférence moins de 5 ppmv de HCN, de manière préférée moins de 1 ppmv de HCN.
En outre le gaz de synthèse purifié peut également contenir moins de 20 ppmv de $NH_3$, de préférence moins de 10 ppmv de $NH_3$, de manière préférée moins de 5 ppmv de $NH_3$, de manière très préférée moins de 2 ppmv de $NH_3$., ainsi que des métaux lourds tels que le plomb, l'arsenic et le mercure.

Selon une variante du procédé, ledit gaz de synthèse purifié peut éventuellement subir une étape e) de purification finale par passage sur au moins un lit de garde et/ou dans un réacteur catalytique. Ladite étape permet d'éliminer totalement les dernières traces d'impuretés restantes dans le gaz de synthèse purifié telles que les composés halogénés, $H_2S$, COS, HCN et $NH_3$, et les métaux lourds tels que plomb, arsenic, mercure. L'étape de purification finale est réalisée par tout moyen connu de l'Homme du métier, à titre d'exemple sur au moins un lit de garde à base d'oxydes et/ou de sulfure de zinc, de Cu/ZnO, de charbon actif, et/ou un catalyseur d'hydrolyse du COS et de l'HCN tel qu'une alumine, un oxyde de titane, une zircone, un composé du chrome seul ou en mélange.

Dans un mode de réalisation préféré, l'effluent gazeux issu de l'étape e) est lavé à l'eau. Cette étape de lavage à l'eau présentent l'avantage d'éliminer les impuretés telles que $NH_3$ et HCl solubles dans l'eau et particulièrement néfastes à l'étape de synthèse Fischer-Tropsch.

Avantageusement, l'étape e) de purification finale est réalisée à une pression absolue comprise entre 20 et 120 bar, de préférence entre 25 et 60 bar, et plus préférentiellement entre 30 et 50 bar.

Le gaz de synthèse contient à l'issue de l'étape de purification finale, une teneur totale en soufre inférieure 10 ppbv, de préférence inférieure à 5 ppbv, de manière plus préférée inférieure à 2 ppbv, une teneur en HCN inférieure 10 ppbv, de préférence inférieure à 5 ppbv, de manière plus préférée inférieure à 2 ppbv, et une teneur en $NH_3$ inférieure 1 ppmv, de préférence inférieure à 0,5 ppmv, de manière plus préférée inférieure à 0,1 ppmv.

Selon un mode particulier de réalisation, le procédé selon l'invention peut être utilisé pour le conditionnement et la purification des gaz mis en oeuvre dans les unités de synthèse chimique, tel que par exemple la synthèse de méthanol. Dans les unités de synthèse chimique, les gaz de synthèse sont généralement mis en oeuvre à une pression comprise entre 10 et 150 bar, de préférence de 50 à 100 bar, et à une température comprise entre 150 et 300°C, de préférence entre 220 et 280°C.

Selon un autre mode de réalisation, le procédé selon l'invention peut être utilisé pour le conditionnement et la purification des gaz mis en oeuvre dans les installations de cogénération. Dans les installations de cogénération, les gaz de synthèse sont généralement mis en oeuvre à une pression comprise entre 1 et 150 bar, de préférence de 15 à 50 bar, et à une température comprise entre 100 et 450°C, de préférence entre 170 et 350°C.

Dans un mode de réalisation préféré de l'invention, le gaz de synthèse issu du procédé de purification selon l'invention est envoyé dans une étape f) de synthèse Fischer-Tropsch.

### f) Étape f) de réaction catalytique de synthèse Fischer-Tropsch

Selon le procédé de l'invention, l'étape f) de synthèse Fischer-Tropsch du procédé est réalisée à partir d'une alimentation comprenant l'effluent issu de l'étape e) et permettant la production d'un flux comprenant des hydrocarbures liquides de synthèse et au moins un effluent gazeux. De manière avantageuse, l'alimentation de l'étape f) de synthèse Fischer-Tropsch comporte du monoxyde de carbone et de l'hydrogène avec un rapport molaire $H_2/CO$ compris entre 0,5 et 4, de préférence entre 1 et 3, de manière plus préférée entre 1,5 et 2,5.

L'étape f) de synthèse Fischer-Tropsch est mise en oeuvre dans une unité réactionnelle comprenant un ou plusieurs réacteurs adaptés, dont la technologie est connue de l'Homme de métier. Il peut s'agir, par exemple, de réacteurs à lit fixe multitubulaire, ou de réacteurs de type colonne à bulles, connus en anglais sous l'appellation de "slurry bubble column", ou de réacteurs microcanaux.

Selon un mode préféré de l'invention, l'étape f) met en oeuvre un ou plusieurs réacteurs de type colonne à bulles. La synthèse étant fortement exothermique, ce mode de réalisation permet, entre autres, d'améliorer le contrôle thermique du réacteur et de créer peu de perte de charges.

Le catalyseur mis en oeuvre dans cette étape f) de synthèse Fischer-Tropsch est généralement tout solide catalytique connu de l'Homme du métier permettant de réaliser la synthèse Fischer-Tropsch. De préférence, le catalyseur mis en oeuvre dans ladite étape comporte du cobalt ou du fer, de manière plus préférée du cobalt. Le catalyseur mis en oeuvre à l'étape f) est généralement un catalyseur supporté. Le support peut être, à titre d'exemple, à base d'alumine, de silice ou de titane.

Les conditions de température et de pression sont variables et adaptées au catalyseur mis en oeuvre dans cette étape f). La pression absolue est généralement comprise entre 10 et 60 bar, de préférence entre 15 et 35 bar et préférentiellement entre 20 et 30 bar. La température peut être généralement comprise entre 170 et 280°C, de préférence entre 190 et 260°C et préférentiellement entre 210 et 240°C.

## DESCRIPTION DES FIGURES

La figure 1 représente le schéma général du procédé selon l'invention selon lequel un gaz de synthèse (1) est séparé (a) en deux effluents (2) et (5), l'effluent (2) subissant une étape de conversion du monoxyde de carbone à la vapeur dans une unité b1) et l'effluent (5) subissant une étape d'hydrolyse catalytique du COS et de l'HCN dans une unité c1). Les effluents (3) et (6) issus respectivement des unités b1) et c1) subissent respectivement une étape dédiée d'élimination des gaz acides b2) et c2) et les effluents issus des unités b2) et c2) sont recombinés dans une unité d) pour produire un gaz de synthèse purifié (8).

La figure 2 représente le schéma général du procédé selon l'invention, dans un autre mode de réalisation selon lequel l'effluent issu de l'unité b1) est envoyé via la conduite (3) dans l'unité b1') d'hydrolyse du COS et de l'HCN,

puis l'effluent issu de l'unité b1') est ensuite envoyé via la conduite (3') dans l'étape b2) d'élimination des gaz acides.

La figure 3 représente le schéma général du procédé selon l'invention, dans un autre mode de réalisation selon lequel l'effluent (8) issu de l'unité d) de recombinaison des flux de gaz de synthèse est envoyé dans une unité e) de purification finale pour produire un gaz de synthèse purifié dans la conduite (9) puis vers une unité f) de synthèse d'hydrocarbures par voie Fischer-Tropsch.

La figure 4 représente un schéma d'enchaînement de procédés selon l'art antérieur, selon lequel une étape d'élimination des gaz acides est réalisée sur les flux de gaz après l'étape d) de recombinaison. La figure 4 est décrite en détail dans l'exemple 1.

D'autres avantages, détails et caractéristiques de l'invention apparaîtront plus clairement dans la description des trois modes de réalisation illustrés dans les figures 1, 2 et 3. Ces modes de réalisation sont donnés, à titre d'exemple, et ne présentent aucun caractère limitatif. Cette illustration du procédé de l'invention ne comporte pas l'ensemble des composantes nécessaires à sa mise en oeuvre. Seuls les éléments nécessaires à la compréhension de l'invention y sont représentés, l'Homme du métier étant capable de compléter cette représentation pour mettre en oeuvre l'invention.

## EXEMPLES

Exemple 1 : Purification d'un gaz de synthèse selon l'art antérieur :

La figure 4 décrit un enchaînement de procédé selon l'art antérieur. Sur la figure 4, l'étape a) correspond à une étape de fractionnement du gaz de synthèse n°1, en deux flux de gaz de composition identique n°2 et n°4, le flux de gaz n°2 étant envoyé vers une étape b1) de conversion du monoxyde CO à la vapeur pour donner un flux de gaz n°3, les flux de gaz n°3 et n°4 étant recombinés lors de l'étape de recombinaison d) pour donner le flux de gaz n°5, le flux de gaz n°5 subissant ensuite une étape b2) d'élimination des gaz acides pour donner un flux de gaz n°6.

Débit de gaz traité (flux n°1): 453 000 $Nm^3/h$
Débit de gaz vers l'étape b1) (flux n°2): 232 000 $Nm^3/h$
Débit de gaz contournant l'étape b1) (flux n°4): 221 000 $Nm^3/h$

Étape b1) de conversion du CO à la vapeur

Le catalyseur Cat1 utilisé est un catalyseur industriel à base de cobalt et de molybdène. Ce catalyseur industriel a une teneur en cobalt métallique de 2,2% masse et en molybdène métallique de 8,3% masse. Sa surface spécifique déterminée par la méthode BET est de 196 $m^2/g$. Ce catalyseur est utilisé sous sa forme sulfurée. Le catalyseur se présente sous la forme d'extrudés d'environ 3 mm de diamètre.
La charge gazeuse de composition décrite dans le tableau 1 (flux n°2) est injectée dans un réacteur en lit fixe chargé en catalyseur Cat1. Les conditions opératoires sélectionnées sont :

- vitesse volumique horaire VVH (volume de charge / volume de catalyseur / heure) = 3000 $h^{-1}$
- pression opératoire absolue : 26 bar
- température d'entrée du lit catalytique : 250°C
- température du lit catalytique : 350°C

Le suivi analytique en sortie de réacteur a permis de déterminer la conversion du monoxyde de carbone. Les résultats expérimentaux sont donnés dans le tableau 1 (composition du flux de sortie n°3).

Étape b2) d'élimination des gaz acides

Selon l'art antérieur, le gaz de synthèse est purifié par un lavage par une solution aqueuse d'amine pour éliminer le $CO_2$ et l'$H_2S$. En utilisant une solution aqueuse de méthyldiéthanolamine (MDEA) activée comprenant 38% masse de méthyldiéthanolamine (MDEA), 8% masse de diéthyléthanolamine (DEA) et 54% masse d'eau, le débit de solvant nécessaire pour purifier 270 000 $Nm^3/h$ de gaz est de 1640 $Sm^3/h$ dans les conditions opératoires suivantes dans l'absorbeur :

- Température : 45°C
- Pression: 26 bar

Les teneurs résiduelles en composés acides dans le gaz à l'issue de l'étape d'élimination b2) des gaz acides selon l'art antérieur sont: pour l'$H_2S$ de 1 ppmv, pour le $CO_2$ de 10 ppmv et pour le COS de 50 ppmv.
L'évolution de la composition du gaz est précisée dans le tableau 1 ci-dessous :
Les numéros des flux font référence à la figure 4.

Tableau 1 : composition du gaz de synthèse à purifier.

| | Flux n°1, n°2, n°4 | Flux n°3 | Flux n°5 | Flux n°6 |
|---|---|---|---|---|
| $H_2$ (% volume) | 14,6 | 39,6 | 27,4 | 63,4 |
| CO (% volume) | 25,7 | 2,0 | 13,6 | 31,5 |
| $CO_2$ (% volume) | 6,6 | 31,5 | 19,4 | 0,001 |
| $H_2O$ (% volume) | 50,8 | 24,6 | 37,4 | 0,25 |
| $H_2S$ (ppmvl) | 4300 | 4750 | 4530 | 1 |
| COS (ppmv) | 480 | 30 | 250 | 145 |
| HCN (ppmv) | 200 | 1 | 100 | 15 |
| $NH_3$ (ppmv) | 650 | 850 | 750 | 10 |
| $H_2$/CO | 0,6 | 19,8 | 2,0 | 2,0 |

Exemple 2 : Purification d'un gaz de synthèse selon l'invention :

La figure 1 décrit un enchaînement de procédés selon l'invention.
Débit de gaz traité (flux n°1): 453 000 $Nm^3/h$
Débit de gaz vers l'étape b1) (flux n°2): 232 000 $Nm^3/h$
Débit de gaz vers l'étape c1) (flux n°5): 221 000 $Nm^3/h$

Étape b1) de conversion du CO à la vapeur

Le catalyseur Cat1 utilisé est un catalyseur industriel à base de cobalt et de molybdène. Ce catalyseur industriel a une teneur en cobalt métallique de 2,2% masse et en molybdène métallique de 8,3% masse. Sa surface spécifique déterminée par la méthode BET est de 196 $m^2/g$. Ce catalyseur est utilisé sous sa forme sulfurée. Le catalyseur se présente sous la forme d'extrudés d'environ 3 mm de diamètre.
La charge gazeuse de composition décrite dans le tableau 2 (flux n°2) est injectée dans un réacteur en lit fixe chargé en catalyseur Cat1. Les conditions opératoires sélectionnées sont :

- vitesse volumique horaire VVH (volume de charge / volume de catalyseur / heure) = 3000 $h^{-1}$
- pression opératoire absolue : 26 bar
- température d'entrée du lit catalytique : 250°C
- température du lit catalytique : 350°C

Le suivi analytique en sortie de réacteur a permis de déterminer la conversion du monoxyde de carbone. Les résultats expérimentaux sont donnés dans le tableau 2 (composition du flux de sortie n°3).

Étape b2) d'élimination des gaz acides

Selon l'invention, le gaz de synthèse issu de l'étape b1) est purifié par un lavage par une solution aqueuse de méthyldiéthanolamine (MDEA) activée comprenant 38% masse de méthyldiéthanolamine (MDEA), 8% masse de diéthyléthanolamine (DEA) et 54% masse d'eau, le débit de solvant nécessaire pour purifier 168 000 $Nm^3/h$ de gaz est de 1340 $Sm^3/h$ dans les conditions opératoires suivantes dans l'absorbeur:

- Température : 45°C
- Pression: 26 bar

Étape c1) d'hydrolyse du COS et de l'HCN

Le catalyseur Cat2 utilisé est un catalyseur industriel à base d'oxyde de titane. Ce catalyseur industriel a une teneur en oxyde de titane de 85% masse. Sa surface spécifique déterminée par la méthode BET est de 120 $m^2/g$. Le catalyseur se présente sous la forme d'extrudés d'environ 3 mm de diamètre.
La charge gazeuse de composition décrite dans le tableau 2 (flux n°5) est injectée dans un réacteur en lit fixe chargé en catalyseur Cat2. Les conditions opératoires sélectionnées sont :

- vitesse volumique horaire VVH (volume de charge / volume de catalyseur / heure) = 1500 $h^{-1}$
- pression opératoire absolue : 26 bar
- température du lit catalytique : 250°C

Le suivi analytique en sortie de réacteur a permis de déterminer les conversions de COS et HCN. Les résultats expérimentaux sont donnés dans le tableau 2 (composition du flux de sortie n°6).

Étape c2) d'élimination des gaz acides

Selon l'invention, le gaz de synthèse issu de l'étape c1) est purifié par un lavage par une solution aqueuse de méthyldiéthanolamine (MDEA) comprenant 45% masse de méthyldiéthanolamine (MDEA), et 55% masse d'eau, le débit de solvant nécessaire pour purifier 102 000 $Nm^3/h$ de gaz est de 200 $Sm^3/h$ dans les conditions opératoires suivantes dans l'absorbeur :

- Température : 50°C

- Pression: 26 bar

Dans le tableau 2, les numéros des flux font référence à la figure 1.

Tableau 2 : composition du gaz de synthèse à purifier.

| | Flux n°1, n°2, n°5 | Flux n°3 | Flux n°4 | Flux n°6 | Flux n°7 | Flux n°8 |
|---|---|---|---|---|---|---|
| $H_2$ (% volume) | 14,6 | 39,6 | 90,2 | 14,6 | 30,7 | 60,0 |
| CO (% volume) | 25,7 | 2,0 | 4,6 | 25,7 | 54,0 | 29,7 |
| $CO_2$ (% volume) | 6,6 | 31,5 | 0,001 | 6,6 | 5,0 | 2,5 |
| $H_2O$ (% volume) | 50,8 | 24,6 | 0,25 | 50,8 | 0,25 | 0,25 |
| $H_2S$ (ppmv) | 4300 | 4750 | 1 | 4775 | 1 | 1 |
| COS (ppmv) | 480 | 30 | 17 | 3 | 3 | 10 |
| HCN (ppmv) | 200 | 1 | 1 | 1 | 1 | 1 |
| $NH_3$ (ppmv) | 650 | 850 | 10 | 850 | 10 | 10 |
| $H_2/CO$ | 0,6 | 19,8 | 19,8 | 0,6 | 0,6 | 2,0 |

Tableau 3 : Débits de solvants mis en oeuvre pour l'exemple 1 selon l'art antérieur, et pour l'exemple 2 selon l'invention.

| | Exemple 1 selon l'art antérieur | Exemple 2 selon l'invention |
|---|---|---|
| Débit de solvant étape b2) aux conditions standard | 1640 $m^3/h$ | 1340 $m^3/h$ |
| Débit de solvant étape c2) aux conditions standard | -- | 200 $m^3/h$ |

Pour un même débit de gaz de synthèse total de 270 000 $Nm^3/h$, le schéma de purification selon l'invention requiert un débit de 200 $m^3/h$ de MDEA dans l'étape c2) et un débit de 1340 $m^3/h$ de MDEA activée dans l'étape b2). Le procédé selon l'invention permet donc de réduire le débit global de solvant utilisé de 6%. Les consommations

énergétiques nécessaires à la régénération des solutions aqueuses d'amines s'en trouvent également diminuées dans les mêmes proportions.
Les teneurs résiduelles en composés acides dans le gaz à l'issue de l'étape de lavage sont : pour l'$H_2S$ de 1 ppmv, pour le COS de 10 ppmv, et pour l'HCN de 1 ppmv, soit des teneurs en impuretés bien inférieures à celles obtenues dans l'exemple 1 selon l'art antérieur.
Le gaz de synthèse obtenu présente un ratio $H_2/CO$ égal à 2.

Exemple 3 : Purification d'un gaz de synthèse selon l'invention :

La figure 2 décrit un enchaînement de procédés selon l'invention.
Débit de gaz traité (flux n°1): 453 000 $Nm^3/h$
Débit de gaz vers l'étape b1) (flux n°2): 232 000 $Nm^3/h$
Débit de gaz vers l'étape c1) (flux n°5): 221 000 $Nm^3/h$

Étape b1) de conversion du CO à la vapeur

Le catalyseur Cat1 utilisé est un catalyseur industriel à base de cobalt et de molybdène. Ce catalyseur industriel a une teneur en cobalt métallique de 2,2%masse et en molybdène métallique de 8,3%masse. Sa surface spécifique déterminée par la méthode BET est de 196 $m^2/g$. Ce catalyseur est utilisé sous sa forme sulfurée. Le catalyseur se présente sous la forme d'extrudés d'environ 3 mm de diamètre.
La charge gazeuse de composition décrite dans le tableau 4 (flux n°2) est injectée dans un réacteur en lit fixe chargé en catalyseur Cat1. Les conditions opératoires sélectionnées sont :

- vitesse volumique horaire VVH (volume de charge / volume de catalyseur / heure) = 3000 $h^{-1}$
- pression opératoire absolue : 26 bar
- température d'entrée du lit catalytique : 250°C
- température du lit catalytique : 350°C

Le suivi analytique en sortie de réacteur a permis de déterminer la conversion du monoxyde de carbone. Les résultats expérimentaux sont donnés dans le tableau 4 (composition du flux de sortie n°3).

Étape b1') d'hydrolyse du COS et de l'HCN

Le catalyseur Cat2 utilisé est un catalyseur industriel à base d'oxyde de titane. Ce catalyseur industriel a une teneur en oxyde de titane de 85%masse. Sa surface spécifique déterminée par la méthode BET est de 120 $m^2/g$. Le catalyseur se présente sous la forme d'extrudés d'environ 3 mm de diamètre.
La charge gazeuse de composition décrite dans le tableau 4 (flux n°3) issue de l'étape b1) de conversion du CO à la vapeur est injectée dans un réacteur en lit fixe chargé en catalyseur Cat2. Les conditions opératoires sélectionnées sont :

- vitesse volumique horaire VVH (volume de charge / volume de catalyseur / heure) = 1500 $h^{-1}$
- pression opératoire absolue : 26 bar
- température du lit catalytique : 250°C

Le suivi analytique en sortie de réacteur a permis de déterminer les conversions de COS et HCN. Les résultats expérimentaux sont donnés dans le tableau 4 (composition du flux de sortie n°3').

Étape b2) d'élimination des gaz acides

Selon l'invention, le gaz de synthèse issu de l'étape b1) est purifié par un lavage par une solution aqueuse de méthyldiéthanolamine (MDEA) activée comprenant 38% masse de méthyldiéthanolamine (MDEA), 8% masse de diéthyléthanolamine (DEA) et 54% masse d'eau, le débit de solvant nécessaire pour purifier 168 000 $Nm^3/h$ de gaz est de 1340 $Sm^3/h$ dans les conditions opératoires suivantes dans l'absorbeur:

- Température : 45°C
- Pression: 26 bar

Étape c1) d'hydrolyse du COS et de l'HCN

Le catalyseur Cat2 utilisé est un catalyseur industriel à base d'oxyde de titane. Ce catalyseur industriel a une teneur en oxyde de titane de 85%masse. Sa surface spécifique déterminée par la méthode BET est de 120 $m^2/g$. Le catalyseur se présente sous la forme d'extrudés d'environ 3 mm de diamètre.
La charge gazeuse de composition décrite dans le tableau 4 (flux n°5) est injectée dans un réacteur en lit fixe chargé en catalyseur Cat2. Les conditions opératoires sélectionnées sont :

- vitesse volumique horaire VVH (volume de charge / volume de catalyseur / heure) = 1500 $h^{-1}$
- pression opératoire absolue : 26 bar
- température du lit catalytique : 250°C

Le suivi analytique en sortie de réacteur a permis de déterminer les conversions de COS et HCN. Les résultats expérimentaux sont donnés dans le tableau 4 (composition du flux de sortie n°6).

Étape c2) d'élimination des gaz acides

Selon l'invention, le gaz de synthèse issu de l'étape c1) est purifié par un lavage par une solution aqueuse de MDEA comprenant 45% masse de MDEA, et 55% masse d'eau, le débit de solvant nécessaire pour purifier 102 000 $Nm^3/h$ de gaz est de 200 $Sm^3/h$ dans les conditions opératoires suivantes dans l'absorbeur :

- Température : 50°C

- Pression: 26 bar

Le tableau 4 fait référence à la figure 2.

Tableau 4: composition du gaz de synthèse à purifier.

| | Flux n°1, n°2, n°5 | Flux n°3 | Flux n°3' | Flux n°4 | Flux n°6 | Flux n°7 | Flux n°8 |
|---|---|---|---|---|---|---|---|
| $H_2$ (% volume) | 14,6 | 39,6 | 39,6 | 90,2 | 14,6 | 30,7 | 60,0 |
| CO (% volume) | 25,7 | 2,0 | 2,0 | 4,6 | 25,7 | 54,0 | 29,7 |
| $CO_2$ (% volume) | 6,6 | 31,5 | 31,5 | 0,001 | 6,6 | 5,0 | 2,5 |
| $H_2O$ (% volume) | 50,8 | 24,6 | 24,6 | 0,25 | 50,8 | 0,25 | 0,25 |
| $H_2S$ (ppmv) | 4300 | 4750 | 4770 | 1 | 4775 | 1 | 1 |
| COS (ppmv) | 480 | 30 | 8 | 5 | 3 | 3 | 4 |
| HCN (ppmv) | 200 | 1 | 1 | 1 | 1 | 1 | 1 |
| $NH_3$ (ppmv) | 650 | 850 | 850 | 10 | 850 | 10 | 10 |
| $H_2/CO$ | 0,6 | 19,8 | 19,8 | 19,8 | 0,6 | 0,6 | 2,0 |

Tableau 5 : Débits de solvants mis en oeuvre pour l'exemple 1 selon l'art antérieur, et pour l'exemple 3 selon l'invention.

| | Exemple 1 selon l'art antérieur | Exemple 3 selon l'invention |
|---|---|---|
| Débit de solvant étape b2) aux conditions standards | 1640 $m^3/h$ | 1340 $m^3/h$ |
| Débit de solvant étape c2) aux conditions standards | -- | 200 $m^3/h$ |

Pour un même débit de gaz de synthèse total de 270 000 $Nm^3/h$, le schéma de purification selon l'invention requiert un débit de 200 $m^3/h$ de MDEA dans l'étape c2) et un débit de 1340 $m^3/h$ de MDEA activée dans l'étape b2). Le procédé selon l'invention permet donc de réduire le débit global de solvant utilisé de 6%. Les consommations énergétiques nécessaires à la régénération des solutions aqueuses d'amines s'en trouvent également diminuées dans

les mêmes proportions.

Dans la variante du procédé selon l'invention décrite dans l'exemple 3, les teneurs résiduelles en composés acides dans le gaz à l'issue de l'étape de lavage sont : pour l'$H_2S$ de 1 ppmv, pour le COS de 4 ppmv, et pour l'HCN de 1 ppmv, soit des teneurs en impuretés bien inférieures à celles obtenues dans l'exemple 1 selon l'art antérieur.

Le gaz de synthèse obtenu présente un ratio $H_2/CO$ égal à 2.

Exemple 4 : dégradation d'amines secondaires par le CO et le $CO_2$

Des essais expérimentaux visant à comparer les cinétiques de dégradation par le CO et le $CO_2$ d'amines secondaires ont été réalisés. L'équipement expérimental utilisé à cet effet est constitué de quatre autoclaves permettant de réaliser simultanément quatre essais de dégradation à la même température. Une quantité $m_{initiale}$ de solution aqueuse d'amine de concentration $C_{amine\ initiale}$ est introduite dans l'autoclave. Dans cette étude, la concentration en MDEA (méthyldiéthanolamine) est de 38% masse, et la concentration de pipérazine est de 7,7% masse.

A la fin du test, la solution de masse $m_{finale}$ est récupérée et analysée par chromatographie phase gaz afin de déterminer la concentration $C_{amine\ finale}$ de l'amine et d'en déduire un taux de dégradation $\tau$ exprimé comme tel :

$$\tau = (m_{initiale} \times C_{initiale} - m_{finale} \times C_{finale})/(m_{initiale} \times C_{initiale})$$

Le test consiste à comparer la stabilité l'amine en mélange sous 5 bar de CO ou de $CO_2$ à 140°C pendant 14 jours. La température est fixée à 140°C, correspondant à la température du fond de la colonne de régénération. Les résultats de dégradation en présence de $CO_2$ sont pris comme référence. Chaque essai a été reproduit une fois ("essai 1", "essai 2").

Le tableau ci-dessous présente les résultats des essais réalisés :

| | | Dégradation 5 bar $CO_2$ | |
|---|---|---|---|
| | C %m | Essai 1 | Essai 2 |
| Pipérazine | 7,7 | 26% | 28% |
| | | Dégradation 5 bar CO | |
| Pipérazine | 7,7 | 51% | 53% |

Dans les conditions de ces essais expérimentaux, la pipérazine (amine secondaire) se dégrade environ deux fois plus en présence de CO qu'avec le $CO_2$.

Ceci confirme que l'utilisation de la pipérazine comme activateur, et plus largement l'utilisation d'amine secondaire est justifiée pour le traitement d'un gaz appauvri en CO lors de l'étape de lavage b2) située en aval de l'étape de conversion du CO à la vapeur b1).

Exemple 5 : dégradation comparée d'amines secondaires et tertiaires par le CO

Des essais expérimentaux visant à comparer les cinétiques de dégradation par le CO d'amines secondaires et tertiaires ont été réalisés. L'équipement expérimental utilisé à cet effet est constitué de quatre autoclaves permettant de réaliser simultanément quatre essais de dégradation à la même température.

Une quantité $m_{initiale}$ de solution aqueuse d'amine de concentration $C_{amine\ initiale}$ est introduite dans l'autoclave. Dans cette étude, la concentration en MDEA (méthyldiéthanolamine) est de 38% masse, et la concentration de pipérazine est de 7,7% masse.

Le test consiste à comparer la stabilité de chaque amine en mélange sous 5 bar de CO à 140°C pendant 14 jours. La température est fixée à 140°C, correspondant à la température du fond de la colonne de régénération.

Les prélèvements d'échantillons au cours du temps et leurs dosages par chromatographie en phase gaz permettent de suivre l'évolution des concentrations sur la durée de l'essai.

Une étude de la cinétique est réalisée en se basant sur l'hypothèse d'une cinétique d'ordre 1 par rapport à l'amine :

$$-d[amine]/dt = k\ [amine],$$

dans laquelle k est la constante cinétique apparente exprimée en $h^{-1}$.

Le tableau ci-dessous donne les constantes cinétiques apparentes de dégradation de la MDEA (k MDEA) et de la pipérazine (k pipérazine) par le CO :

| | k MDEA | k pipérazine |
|---|---|---|
| Dégradation sous CO | 0,0077 $h^{-1}$ | 0,0819 $h^{-1}$ |

La dégradation de la MDEA en présence de CO est 10 fois plus lente que la dégradation de la pipérazine dans les mêmes conditions.

L'utilisation de MDEA seule, et plus largement d'amines tertiaires est justifiée pour le traitement d'un gaz riche en CO lors de l'étape de lavage c2).

La mise en oeuvre des étapes d'élimination des gaz acides b2) et c2) selon l'invention permet ainsi de réduire de manière significative la dégradation des solutions aqueuses d'amines mises en oeuvre dans chaque étape. En effet, d'une part, lors de l'étape b2) le contact entre CO et amines primaires et/ou secondaires est minimisé du fait de la composition du gaz à traiter présentant une teneur en CO réduite par rapport au gaz de synthèse brut. D'autre part, lors de l'étape c2) la ou les amines tertiaires utilisées sont moins sensibles à la dégradation par le CO.

## Revendications

**1.** Procédé de purification du gaz de synthèse comprenant au moins les étapes suivantes :

a) une étape de division du gaz de synthèse en au moins un premier et un deuxième flux de gaz de synthèse de même composition,
b1) une étape de conversion du monoxyde de carbone à la vapeur du premier flux de gaz de synthèse issu de l'étape a), pour produire un effluent gazeux comprenant au moins de l'hydrogène $H_2$ et du dioxyde de carbone $CO_2$,
b2) une étape d'élimination des gaz acides de l'effluent gazeux issu de l'étape b1) par mise en contact dudit effluent avec une solution aqueuse d'amines comprenant au moins une amine primaire et/ou secondaire, en mélange ou pas avec au moins une amine tertiaire ou une amine secondaire dite encombrée contenant au moins un carbone quaternaire en $\alpha$ (alpha) de l'azote ou deux carbones tertiaires en position $\alpha$ et $\alpha'$,
c1) une étape d'hydrolyse catalytique du COS et de l'HCN présents dans le deuxième flux de gaz de synthèse n'ayant pas subi la réaction de conversion du monoxyde de carbone à la vapeur,
c2) une étape d'élimination des gaz acides du flux de gaz de synthèse issu de l'étape d'hydrolyse catalytique de COS et HCN c1), par mise en contact dudit flux avec une solution aqueuse d'amines comprenant au moins une amine tertiaire,
d) la recombinaison d'au moins une partie des effluents gazeux issus des étapes b2) et c2) pour obtenir un gaz de synthèse purifié.

**2.** Procédé selon la revendication 1 dans lequel ladite étape b1) est réalisée à une pression absolue comprise entre 20 et 120 bar, à une vitesse volumique horaire VVH comprise entre 1000 et 10000 $h^{-1}$, et à une température comprise entre 150 et 550°C.

**3.** Procédé selon l'une des revendications 1 ou 2 dans lequel le catalyseur mis en oeuvre dans ladite étape b1) comprend au moins un élément du groupe VIII et/ou au moins un élément du groupe VIB de la classification périodique et un support choisi dans le groupe constitué par les alumines, la silice, les silices alumines.

**4.** Procédé selon l'une des revendications 1 à 3 dans lequel l'effluent gazeux issu de l'étape b1) est envoyé dans une étape b1') d'hydrolyse catalytique du COS et HCN en $H_2S$ et $NH_3$.

**5.** Procédé selon l'une des revendications 1 à 4 dans lequel la ou les amines primaires utilisées dans l'étape b2) sont choisies parmi la monoéthanolamine, l'aminoéthyléthanolamine, la diglycolamine, la 2-amino-2-méthyl-1-propanol et ses dérivés non N substitués, seule ou en mélange.

**6.** Procédé selon l'une des revendications 1 à 5 dans lequel la ou les amines secondaires utilisées dans l'étape b2) sont choisies parmi la diéthanolamine (DEA), la diisopropanolamine, la pipérazine et ses dérivés dans lesquels au moins un atome d'azote n'est pas substitué, la morpholine et ses dérivés non N substitués, la pipéridine et ses dérivés non N substitués, la N-(2'-hydroxyéthyl)-2-amino-2-méthyl-1-propanol, la N-(2'-hydroxypropyl)-2-amino-2-méthyl-1-propanol, la N-(2'-hydroxybutyl)-2-amino-2-méthyl-1-propanol, seule ou en mélange.

**7.** Procédé selon l'une des revendications 1 à 4 dans lequel, dans le cas où ladite étape b2) opère en présence d'une solution aqueuse d'amines comprenant au moins une amine primaire et/ou secondaire, en mélange avec au moins une amine tertiaire ou une amine secondaire contenant au moins un carbone quaternaire en $\alpha$ ou alpha de l'azote ou deux carbones tertiaires en position $\alpha$ et $\alpha'$, la ou les amines primaires et/ou secondaires appelées "activateurs", sont choisies parmi les molécules la monoéthanolamine, la diéthanolamine, la N-butyléthanolamine, l'aminoéthyléthanolamine, le diglycolamine, la pipérazine, la 1-méthylpipérazine, la 2-méthylpipérazine, la N-(2-hydroxyéthyl)pipérazine, la N-(2-aminoéthyl)pipérazine, la morpholine, la 3-(méthylamino)propylamine, et la 1,6-hexanediamine et tous ses dérivés diversement N-alkylés, seule ou en mélange.

**8.** Procédé selon l'une des revendications 1 à 7 dans lequel, dans le cas où ladite étape b2) opère en présence d'une solution aqueuse d'amines comprenant au moins une amine primaire et/ou secondaire, en mélange avec au moins une amine secondaire dite encombrée contenant au moins un carbone quaternaire en $\alpha$ ou alpha de l'azote ou deux carbones tertiaires en position $\alpha$ et $\alpha'$, la ou les amines secondaires dites encombrées sont choisies parmi le N-(2'-hydroxyéthyl)-2-amino-2-méthyl-1-propanol, N-(2'-hydroxypropyl)-2-amino-2-méthyl-1-propanol, N-(2'-hydroxybutyl)-2-amino-2-méthyl-1-propanol.

**9.** Procédé selon l'une des revendications 1 à 8 dans lequel, dans le cas où ladite étape b2) opère en présence d'une solution aqueuse d'amines comprenant au moins une amine primaire et/ou secondaire, en mélange avec au moins une amine tertiaire, la ou les amines tertiaires sont choisies parmi la méthyldiéthanolamine (MDEA), la triéthanolamine, l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl)-pipérazine, la 1-méthyl-4-hydroxy-pipéridine, la 1-méthyl-2-hydroxyméthyl-pipéridine, la tertiobutyldiéthanolamine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane, seule ou en mélange.

**10.** Procédé selon l'une des revendications 1 à 9 dans lequel l'étape c1) est mise en oeuvre en présence d'un catalyseur contenant un composé à base de platine, ou un oxyde d'un élément choisi parmi le titane, le zirconium, l'aluminium, le chrome, et le zinc, seuls ou en mélange, ladite étape c1) opérant à une température comprise entre 100 et 400°C, et à une pression absolue comprise entre 20 et 120 bar.

**11.** Procédé selon l'une des revendications 1 à 10 dans lequel la ou les amines tertiaires utilisées dans l'étape c2) sont choisies parmi la méthyldiéthanolamine (MDEA), la triéthanolamine, l'éthyldiéthanolamine, la diéthyléthanolamine, la diméthyléthanolamine, la 1-méthyl-4-(3-diméthylaminopropyl)-pipérazine, la 1-éthyl-4-(diéthylaminoéthyl)-pipérazine, la 1-méthyl-4-hydroxy-pipéridine, la 1-méthyl-2-hydroxyméthyl-pipéridine, la tertiobutyldiéthanolamine, la 1,2-bis-(2-diméthylaminoéthoxy)-éthane, le Bis(diméthylamino-3-propyl)éther, le Bis(diéthylamino-3-propyl)éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther, la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, la N-isopropyl-N-(3-méthoxypropyl)-1-amino-2-butanol, la 1-(4-morpholino)-2-(méthylisopropylamino)-éthane, la 1-(4-morpholino)-2-(méthyltertiobutylamino)-éthane, la 1-(4-morpholino)-2-(diisopropylamino)-éthane, la 1-(4-morpholino)-2-(1-pipéridinyl)-éthane, seule ou en mélange.

**12.** Procédé selon l'une des revendications 1 à 11 dans lequel les étapes b2) et c2) d'élimination des gaz acides comportent une première étape d'absorption des composés acides du gaz de synthèse suivie d'une étape de régénération du solvant.

**13.** Procédé selon la revendication 12 dans lequel la solution aqueuse d'amines utilisée dans l'étape c2) d'élimination des gaz acides est déjà partiellement chargée en gaz acides, et elle provient de l'étape d'absorption d'une unité d'enrichissement de gaz acide ou d'une unité de traitement des gaz de queue de Claus.

**14.** Procédé selon la revendication 13 dans lequel l'étape de régénération est combinée avec une étape de régénération d'une unité d'enrichissement de gaz acide ou d'une unité de traitement des gaz de queue de Claus.

**15.** Procédé selon l'une des revendications 1 à 14 dans lequel ledit gaz de synthèse purifié issu de l'étape d) subit une étape e) de purification finale.

**16.** Procédé selon la revendication 15 dans lequel ledit gaz de synthèse purifié issu de l'étape e) est envoyé dans une étape f) de synthèse Fischer-Tropsch.

**Patentansprüche**

**1.** Verfahren zur Reinigung von Synthesegas, umfassend mindestens die folgenden Schritte:

a) einen Schritt des Teilens des Synthesegases in mindestens einen ersten und einen zweiten Synthesegasstrom mit derselben Zusammensetzung,
b1) einen Schritt des Umwandelns mit Dampf von Kohlenmonoxid des ersten Synthesegasstroms aus dem Schritt a), um einen Gasabstrom zu erzeugen, der mindestens Wasserstoff $H_2$ und Kohlendioxid $CO_2$ umfasst,
b2) einen Schritt des Eliminierens saurer Gase aus dem Gasabstrom aus dem Schritt b1) durch Inkontaktbringen des Abstroms mit einer wässrigen Amin-Lösung, die mindestens ein primäres und/oder sekundären Amin umfasst, in Mischung oder nicht mit mindestens einem tertiären Amin oder einem sekundären Amin, das als gehindert bezeichnet wird, umfassend mindestens einen quatären Kohlenstoff in $\alpha$ (alpha) des Stickstoffs oder zwei tertiäre Kohlenstoffe in Position $\alpha$ und $\alpha'$,
c1) einen Schritt der katalytischen Hydrolyse von COS und von HCN, die in dem zweiten Synthesegasstrom vorhanden sind, der nicht der Umwandlungsreaktion von Kohlenmonoxid im Dampf unterzogen wurde,
c2) einen Schritt des Eliminierens saurer Gase aus dem Synthesegasstrom aus dem Schritt der katalytischen Hydrolyse von COS und HCN c1), durch Inkontaktbringen des Stroms mit einer wässrigen Amin-Lösung, die mindestens ein tertiäres Amin umfasst,
d) Rekombination mindestens eines Teils der Gasabströme aus den Schritten b2) und c2), um ein gereinigtes Synthesegas zu erhalten.

**2.** Verfahren nach Anspruch 1, wobei der Schritt b1) bei einem absoluten Druck zwischen 20 und 120 bar, bei einer Volumengeschwindigkeit pro Stunde WH zwischen 1000 und 10000 $h^{-1}$ und bei einer Temperatur zwischen 150 und 550°C durchgeführt wird.

**3.** Verfahren nach einem der Ansprüche 1 oder 2, wobei der Katalysator, der in dem Schritt b1) verwendet wird, mindestens ein Element der Gruppe VIII und/oder mindestens ein Element der Gruppe VIB des Periodensystems und einen Träger, der ausgewählt wird aus der Gruppe bestehend aus Aluminiumoxiden, Siliciumdioxid, Siliciumdioxiden-Aluminiumoxiden, umfasst.

**4.** Verfahren nach einem der Ansprüche 1 bis 3, wobei der Gasabstrom aus dem Schritt b1) in einen Schritt b1') der katalytischen Hydrolyse von COS und HCN in $H_2S$ und $NH_3$ geschickt wird.

**5.** Verfahren nach einem der Ansprüche 1 bis 4, wobei das oder die primären Amine, die in dem Schritt b2) verwendet werden, ausgewählt werden aus Monoethanolamin, Aminoethylethanolamin, Diglykolamin, 2-Amino-2-methyl-1-propanol und seinen nicht N-substituierten Derivaten, allein oder in Mischung.

**6.** Verfahren nach einem der Ansprüche 1 bis 5, wobei das oder die sekundären Amine, die in dem Schritt b2) verwendet werden, ausgewählt werden aus Diethanolamin (DEA), Diisopropanolamin, Piperazin und seinen Derivaten, in denen mindestens ein Stickstoffatom nicht substituiert ist, Morpholin und seinen nicht N-substituierten Derivaten,

Piperidin und seinen nicht N-substituierten Derivaten, N-(2'-Hydroxyethyl)-2-amino-2-methyl-1-propanol, N-(2'-Hydroxypropyl)-2-amino-2-methyl-1-propanol, N-(2'-Hydroxybutyl)-2-amino-2-methyl-1-propanol, allein oder in Mischung.

**7.** Verfahren nach einem der Ansprüche 1 bis 4, wobei, in dem Fall, wo der Schritt b2) in Anwesenheit einer wässrigen Amin-Lösung betrieben wird, die mindestens ein primäres und/oder sekundäres Amin umfasst, in Mischung mit mindestens einem tertiären Amin oder einem sekundären Amin, umfassend mindestens einen quaternären Kohlenstoff in $\alpha$ oder alpha des Stickstoffs oder zwei tertiäre Kohlenstoffe in Position $\alpha$ und $\alpha'$, das oder die primären und/oder sekundären Amine, die als "Aktivatoren" bezeichnet werden, ausgewählt werden aus den Molekülen Monoethanolamin, Diethanolamin, N-Butylethanolamin, Aminoethylethanolamin, Diglykolamin, Piperazin, 1-Methylpiperazin, 2-Methylpiperazin, N-(2-Hydroxyethyl)-piperazin, N-(2-Aminoethyl)-piperazin, Morpholin, 3-(Methylamino)-propylamin und 1,6-Hexandiamin und allen seinen verschieden N-alkylierten Derivaten, allein oder in Mischung.

**8.** Verfahren nach einem der Ansprüche 1 bis 7, wobei, in dem Fall, wo der Schritt b2) in Anwesenheit einer wässrigen Amin-Lösung betrieben wird, die mindestens ein primäres und/oder sekundäres Amin umfasst, in Mischung mit mindestens einem sekundären Amin, das als gehindert bezeichnet wird, umfassend mindestens einen quaternären Kohlenstoff in $\alpha$ oder alpha des Stickstoffs oder zwei tertiäre Kohlenstoffe in Position $\alpha$ und $\alpha'$, das oder die sekundären Amine, die als gehindert bezeichnet werden, ausgewählt werden aus N-(2'-Hydroxyethyl)-2-amino-2-methyl-1-propanol, N-(2'-Hydroxypropyl)-2-amino-2-methyl-1-propanol, N-(2'-Hydroxybutyl)-2-amino-2-methyl-1-propanol.

**9.** Verfahren nach einem der Ansprüche 1 bis 8, wobei in dem Fall, wo der Schritt b2) in Anwesenheit einer wässrigen Amin-Lösung betrieben wird, die mindestens ein primäres und/oder sekundäres Amin umfasst, in Mischung mit mindestens einem tertiären Amin, das oder die tertiären Amine ausgewählt werden aus Methyldiethanolamin (MDEA), Triethanolamin, Ethyldiethanolamin, Diethylethanolamin, Dimethylethanolamin, 1-Methyl-4-(3-dimethylaminopropyl)-piperazin, 1-Ethyl-4-(diethylaminoethyl)-piperazin, 1-Methyl-4-hydroxypiperidin, 1-Methyl-2-hydroxymethylpiperidin, Tertiobutyldiethanolamin, 1,2-bis-(2-Dimethylaminoethoxy)-ethan, Bis-(Dimethylamino-3-propyl)-ether, Bis-(diethylamino-3-propyl)-ether, (Dimethylamino-2-ethyl)-(dimethylamino-3-propyl)-ether, (Diethylamino-2-ethyl)-(dimethylamino-3-propyl)-ether, (Dimethylamino-2-ethyl)-(diethylamino-3-propyl)-ether, (Diethylamino-2-ethyl)-(diethylamino-3-propyl)-ether, N-Methyl-N-(3-methoxypropyl)-2-aminoethanol, N-Methyl-N-(3-methoxypropyl)-1-amino-2-propanol, N-Methyl-N-(3-methoxypropyl)-1-amino-2-butanol, N-Ethyl-N-(3-methoxypropyl)-2-aminoethanol, N-Ethyl-N-(3-methoxypropyl)-1-amino-2-propanol, N-Ethyl-N-(3-methoxypropyl)-1-amino-2-butanol, N-Isopropyl-N-(3-methoxypropyl)-2-aminoethanol, N-Isopropyl-N-(3-methoxypropyl)-1-amino-2-propanol, N-Isopropyl-N-(3-methoxypropyl)-1-amino-2-butanol, 1-(4-Morpholino)-2-(methylisopropylamino)-ethan, 1-(4-Morpholino)-2-(methyltertiobutylamino)-ethan, 1-(4-Morpholino)-2-(diisopropylamino)-ethan, 1-(4-Morpholino)-2-(1-piperidinyl)-ethan, allein oder in Mischung.

**10.** Verfahren nach einem der Ansprüche 1 bis 9, wobei der Schritt c1) in Anwesenheit eines Katalysators durchgeführt wird, umfassend eine Verbindung auf der Basis von Platin, oder einem Oxid eines Elements ausgewählt aus Titan, Zirconium, Aluminium, Chrom und Zink, allein oder in Mischung, wobei der Schritt c1) bei einer Temperatur zwischen 100 und 400°C und bei einem absoluten Druck zwischen 20 und 120 bar betrieben wird.

**11.** Verfahren nach einem der Ansprüche 1 bis 10, wobei das oder die tertiären Amine, die in dem Schritt c2) verwendet werden, ausgewählt werden aus Methyldiethanolamin (MDEA), Triethanolamin, Ethyldiethanolamin, Diethylethanolamin, Dimethylethanolamin, 1-Methyl-4-(3-dimethylaminopropyl)-piperazin, 1-Ethyl-4-(diethylaminoethyl)-piperazin, 1-Methyl-4-hydroxypiperidin, 1-Methyl-2-hydroxymethylpiperidin, Tertiobutyldiethanolamin, 1,2-bis-(2-Dimethylaminoethoxy)-ethan, Bis-(Dimethylamino-3-propyl)-ether, Bis-(diethylamino-3-propyl)-ether, (Dimethylamino-2-ethyl)-(dimethylamino-3-propyl)-ether, (Diethylamino-2-ethyl)-(dimethylamino-3-propyl)-ether, (Dimethylamino-2-ethyl)-(diethylamino-3-propyl)-ether, (Diethylamino-2-ethyl)-(diethylamino-3-propyl)-ether, N-Methyl-N-(3-methoxypropyl)-2-aminoethanol, N-Methyl-N-(3-methoxypropyl)-1-amino-2-propanol, N-Methyl-N-(3-methoxypropyl)-1-amino-2-butanol, N-Ethyl-N-(3-methoxypropyl)-2-aminoethanol, N-Ethyl-N-(3-methoxypropyl)-1-amino-2-propanol, N-Ethyl-N-(3-methoxypropyl)-1-amino-2-butanol, N-Isopropyl-N-(3-methoxypropyl)-2-aminoethanol, N-Isopropyl-N-(3-methoxypropyl)-1-amino-2-propanol, N-Isopropyl-N-(3-methoxypropyl)-1-amino-2-butanol, 1-(4-Morpholino)-2-(methylisopropylamino)-ethan, 1-(4-Morpholino)-2-(methyltertiobutylamino)-ethan, 1-(4-Morpholino)-2-(diisopropylamino)-ethan, 1-(4-Morpholino)-2-(1-piperidinyl)-ethan, allein oder in Mischung.

**12.** Verfahren nach einem der Ansprüche 1 bis 11, wobei die Schritte b2) und c2) des Eliminierens saurer Gase einen ersten Schritt des Absorbierens der sauren Verbindungen des Synthesegases, gefolgt von einem Regenerierungsschritt des Lösungsmittels, umfassen.

**13.** Verfahren nach Anspruch 12, wobei die wässrigen Amin-LÖsung, die in dem Schritt c2) des Eliminierens saurer Gase verwendet wird, bereits teilweise mit sauren Gasen beladen ist, und diese aus dem Schritt der Absorption einer Einheit zur Anreicherung saurer Gase oder einer Einheit zur Behandlung von Gasen einer Claus-Anlage stammt.

**14.** Verfahren nach Anspruch 13, wobei der Schritt des Regenerierens mit einem Schritt des Regenerierens einer Einheit zur Anreicherung saurer Gase oder einer Einheit zur Behandlung von Gasen einer Claus-Anlage kombiniert wird.

**15.** Verfahren nach einem der Ansprüche 1 bis 14, wobei das gereinigte Synthesegas aus dem Schritt d) einem Endreinigungsschritt e) unterzogen wird.

**16.** Verfahren nach Anspruch 15, wobei das gereinigte Synthesegas aus dem Schritt e) in einen Schritt f) der Fischer-Tropsch-Synthese geschickt wird.

## Claims

**1.** Process for the purification of synthesis gas, comprising at least the following stages:

a) a stage for dividing the synthesis gas into at least a first synthesis gas flow and a second synthesis gas flow of the same composition,
b1) a stage for the steam conversion of the carbon monoxide of the first synthesis gas flow leaving the stage a), in order to produce a gaseous effluent containing at least hydrogen $H_2$ and carbon dioxide $CO_2$,
b2) a stage for the removal of the acid gases from the gaseous effluent leaving the stage b1) by contacting the said effluent with an aqueous solution of amines comprising at least one primary and/or secondary amine, mixed or not with at least one tertiary amine or a secondary amine containing at least one quaternary carbon atom in the $\alpha$ or alpha position of the nitrogen atom or two tertiary carbon atoms in the $\alpha$ and $\alpha'$ positions,
c1) a stage for the catalytic hydrolysis of the COS and HCN present in the second synthesis gas flow that has not undergone the conversion reaction of carbon monoxide with steam,
c2) a stage for removal of the acid gases from the synthesis gas flow leaving the COS and HCN catalytic hydrolysis stage c1), by contacting the said flow with an aqueous solution of amines containing at least one tertiary amine,
d) recombination of at least a part of the gaseous effluents leaving the stages b2) et c2) in order to obtain a purified synthesis gas.

**2.** Process according to claim 1, in which the said stage b1) is carried out at an absolute pressure between 20 and 120 bar, at an hourly space velocity HSV between 1,000 and 10,000 $h^{-1}$, and at a temperature between 150 and 550°C.

**3.** Process according to one of claims 1 and 2, in which the catalyst used in the said stage b1) contains at least one element from group VIII and/or at least one element from group VIB of the Periodic Table and a support chosen from the group consisting of aluminas, silica, and silica-aluminas.

**4.** Process according to one of claims 1 to 3, in which the gaseous effluent leaving the stage b1) is routed to a stage b1') for the catalytic hydrolysis of COS and HCN to $H_2S$ and $NH_3$.

**5.** Process according to one of claims 1 to 4, in which the primary amine or amines used in the stage b2) are chosen from monoethanolamine, aminoethylethanolamine, diglycolamine, 2-amino-2-methyl-1-propanol and its non N-substituted derivatives, individually or as a mixture.

**6.** Process according to one of claims 1 to 5, in which the secondary amine or amines used in the stage b2) are chosen from diethanolamine (DEA), diisopropanolamine, piperazine and its derivatives containing at least a non substituted nitrogen atom, morpholine and its non N-substituted derivatives, piperidine and its non N-substituted derivatives, N-(2'-hydroxyethyl)-2-amino-2-methyl-1-propanol, N-(2'-hydroxypropyl)-2-amino-2-methyl-1-propanol, N-(2'-hydroxybutyl)-2-amino-2-methyl-1-propanol, individually or as a mixture.

**7.** Process according to one of claims 1 to 4, in which in the case where the said stage b2) is carried out in the presence

of an aqueous solution of amines containing at least one primary amine and/or secondary amine, mixed with at least one tertiary amine or a secondary amine containing at least one quaternary carbon atom in the α or alpha position of the nitrogen atom or two tertiary carbon atoms in the α and α' position, the primary and/or secondary amines termed "activators" are selected from the compounds monoethanolamine, diethanolamine, N-butylethanolamine, aminoethylethanolamine, diglycolamine, piperazine, 1-methylpiperazine, 2-methylpiperazine, N-(2-hydroxyethyl)piperazine, N-(2-aminoethyl)piperazine, morpholine, 3-(methylamino)propylamine, and 1,6-hexanediamine and all its variously N-alkylated derivatives, individually or as a mixture.

**8.** Process according to one of claims 1 to 7, in which in the case where the said stage b2) is carried out in the presence of an aqueous solution of amines containing at least one primary amine and/or secondary amine, mixed with at least one secondary amine containing at least one quaternary carbon atom in the α or alpha position of the nitrogen atom, or two tertiary carbon atoms in the α and α' position, the secondary amine or amines are chosen from N-(2'-hydroxyethyl)-2-amino-2-methyl-1-propanol, N-(2'-hydroxypropyl)-2-amino-2-methyl-1-propanol, N-(2'-hydroxybutyl)-2-amino-2-methyl-1-propanol.

**9.** Process according to one of claims 1 to 8, in which in the case where the said stage b2) is carried out in the presence of an aqueous solution of amines containing at least one primary amine and/or secondary amine, mixed with at least one tertiary amine, the tertiary amine or amines are chosen from methyldiethanolamine (MDEA), triethanolamine, ethyldiethanolamine, diethylethanolamine, dimethylethanolamine, 1-methyl-4-(3-dimethylaminopropyl)-piperazine, 1-ethyl-4-(diethylaminoethyl)-piperazine, 1-methyl-4-hydroxy-piperidine, 1-methyl-2-hydroxymethyl-piperidine, tert-butyldiethanolamine, 1,2-bis-(2-dimethylaminoethoxy)-ethane, Bis(dimethylamino-3-propyl)ether, Bis(diethylamino-3-propyl)ether, (dimethylamino-2-ethyl)-(dimethylamino-3-propyl)-ether, (diethylamino-2-ethyl)-(dimethylamino-3-propyl)-ether, (dimethylamino-2-ethyl)-(diethylamino-3-propyl)-ether, (diethylamino-2-ethyl)-(diethylamino-3-propyl)-ether, N-methyl-N-(3-methoxypropyl)-2-aminoethanol, N-methyl-N-(3-methoxypropyl)-1-amino-2-propanol, N-methyl-N-(3-methoxypropyl)-1-amino-2-butanol, N-ethyl-N-(3-methoxypropyl)-2-aminoethanol, N-ethyl-N-(3-methoxypropyl)-1-amino-2-propanol, N-ethyl-N-(3-methoxypropyl)-1-amino-2-butanol, N-isopropyl-N-(3-methoxypropyl)-2-aminoethanol, N-isopropyl-N-(3-methoxypropyl)-1-amino-2-propanol, N-isopropyl-N-(3-methoxypropyl)-1-amino-2-butanol, 1-(4-morpholino)-2-(methylisopropylamino)-ethane, 1-(4-morpholino)-2-(methyltertiobutylamino)-ethane, 1-(4-morpholino)-2-(diisopropylamino)-ethane, 1-(4-morpholino)-2-(1-piperidinyl)-ethane, individually or as a mixture.

**10.** Process according to one of claims 1 to 9, in which the said stage c1) is carried out in the presence of a catalyst containing a compound based on platinum, or an oxide of an element selected from titanium, zirconium, aluminium, chromium and zinc, individually or as a mixture, the said stage c1) being carried out at a temperature between 100 and 400°C, and at an absolute pressure between 20 and 120 bar.

**11.** Process according to one of claims 1 to 10, in which the tertiary amine or amines used in the stage c2) are chosen from methyldiethanolamine (MDEA), triethanolamine, ethyldiethanolamine, diethylethanolamine, dimethylethanolamine, 1-methyl-4-(3-dimethylaminopropyl)-piperazine, 1-ethyl-4-(diethylaminoethyl)-piperazine, 1-methyl-4-hydroxy-piperidine, 1-methyl-2-hydroxymethyl-piperidine, tert-butyldiethanolamine, 1,2-bis-(2-dimethylaminoethoxy)-ethane, Bis(dimethylamino-3-propyl)ether, Bis(diethylamino-3-propyl)ether, (dimethylamino-2-ethyl)-(dimethylamino-3-propyl)-ether, (diethylamino-2-ethyl)-(dimethylamino-3-propyl)-ether, (dimethylamino-2-ethyl)-(diethylamino-3-propyl)-ether, (diethylamino-2-ethyl)-(diethylamino-3-propyl)-ether, N-methyl-N-(3-methoxypropyl)-2-aminoethanol, N-methyl-N-(3-methoxypropyl)-1-amino-2-propanol, N-methyl-N-(3-methoxypropyl)-1-amino-2-butanol, N-ethyl-N-(3-methoxypropyl)-2-aminoethanol, N-ethyl-N-(3-methoxypropyl)-1-amino-2-propanol, N-ethyl-N-(3-methoxypropyl)-1-amino-2-butanol, N-isopropyl-N-(3-methoxypropyl)-2-aminoethanol, N-isopropyl-N-(3-methoxypropyl)-1-amino-2-propanol, N-isopropyl-N-(3-methoxypropyl)-1-amino-2-butanol, 1-(4-morpholino)-2-(methylisopropylamino)-ethane, 1-(4-morpholino)-2-(methyltertiobutylamino)-ethane, 1-(4-morpholino)-2-(diisopropylamino)-ethane, 1-(4-morpholino)-2-(1-piperidinyl)-ethane, individually or as a mixture.

**12.** Process according to one of claims 1 to 11, in which stages b2) and c2) for the removal of the acid gases comprises a first absorption stage of the acid compounds of the synthesis gas followed by a regeneration stage of the solvent.

**13.** Process according to claim 12, in which the aqueous solution of amines used in the absorption stage is already partially loaded with acid gases and is derived from the absorption stage of an Acid Gas Enrichment Unit or from a Tail Gas Treating Unit downstream a Claus Unit.

**14.** Process according to claim 13, in which the regeneration stage is combined with a regeneration stage of an Acid

Gas Enrichment Unit or a Tail Gas Treating Unit.

**15.** Process according to one of claims 1 to 14, in which the said purified synthesis gas leaving the stage d) is subjected to a final purification stage e).

**16.** Process according to claim 15, in which the said purified synthesis gas leaving step e) is routed to a Fischer-Tropsch synthesis stage f).

Figure 1

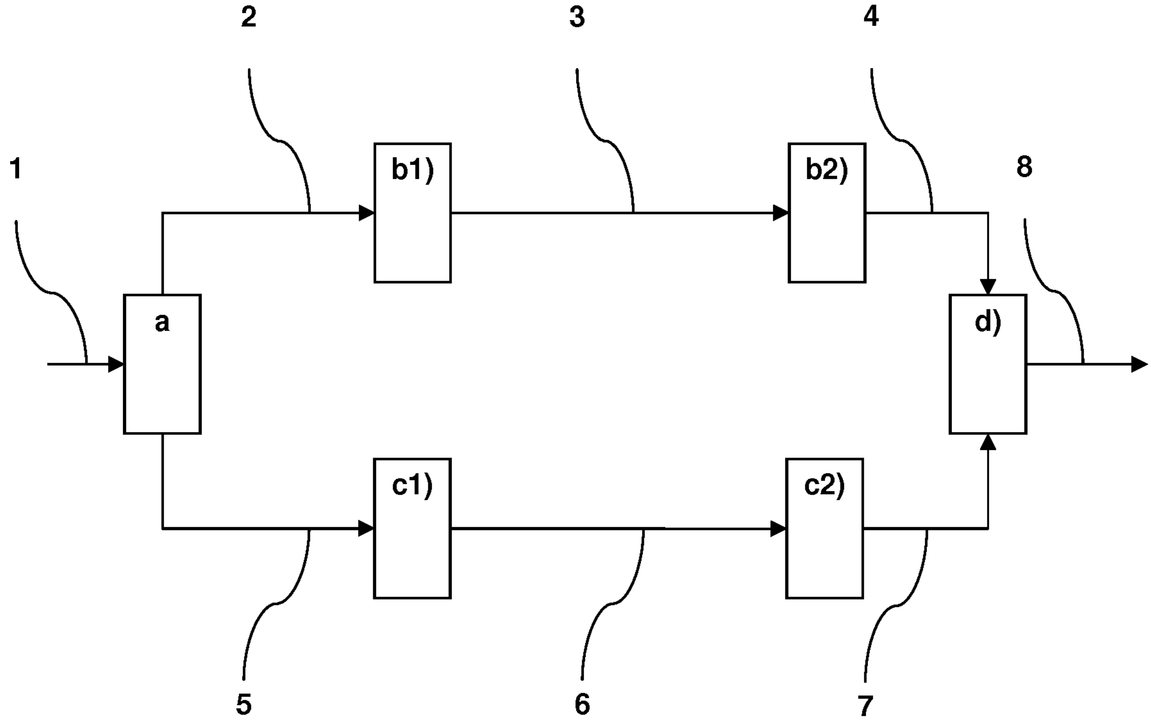

Figure 2

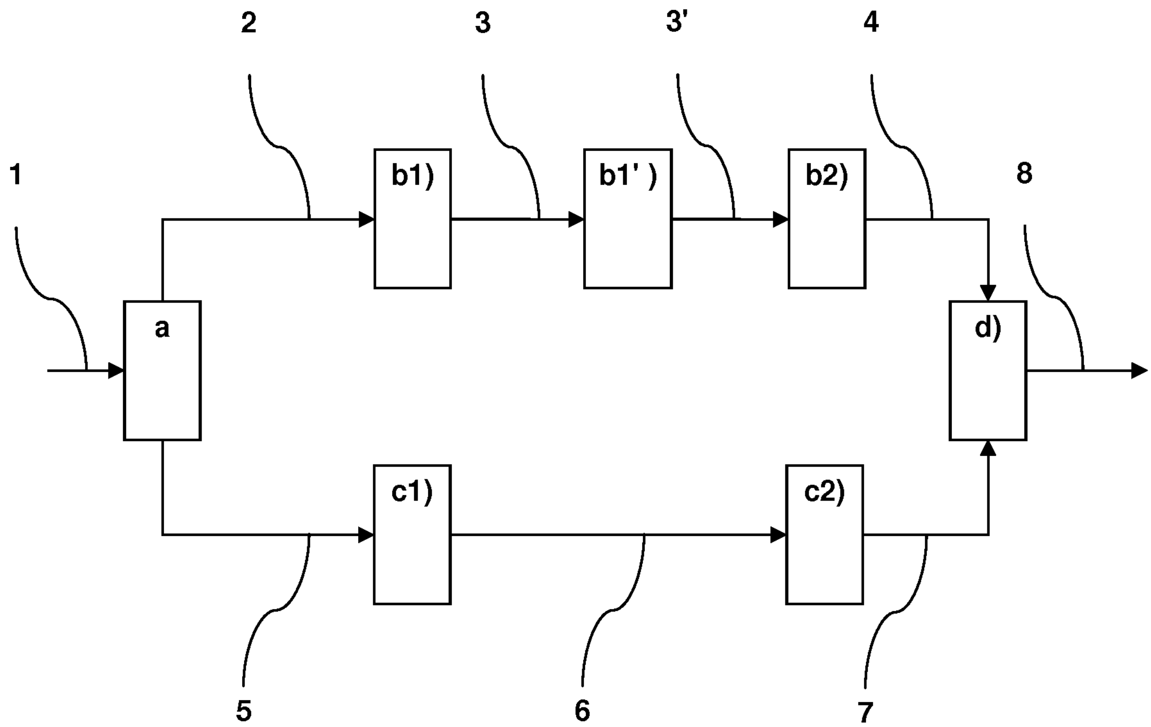

Figure 3

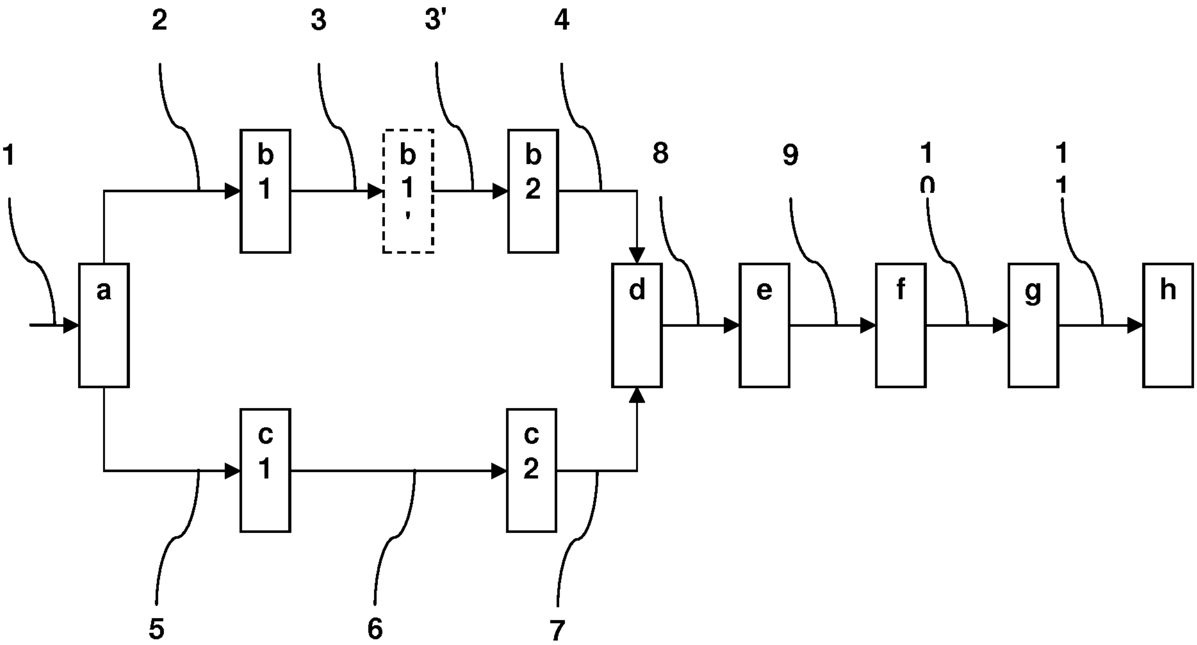

Figure 4

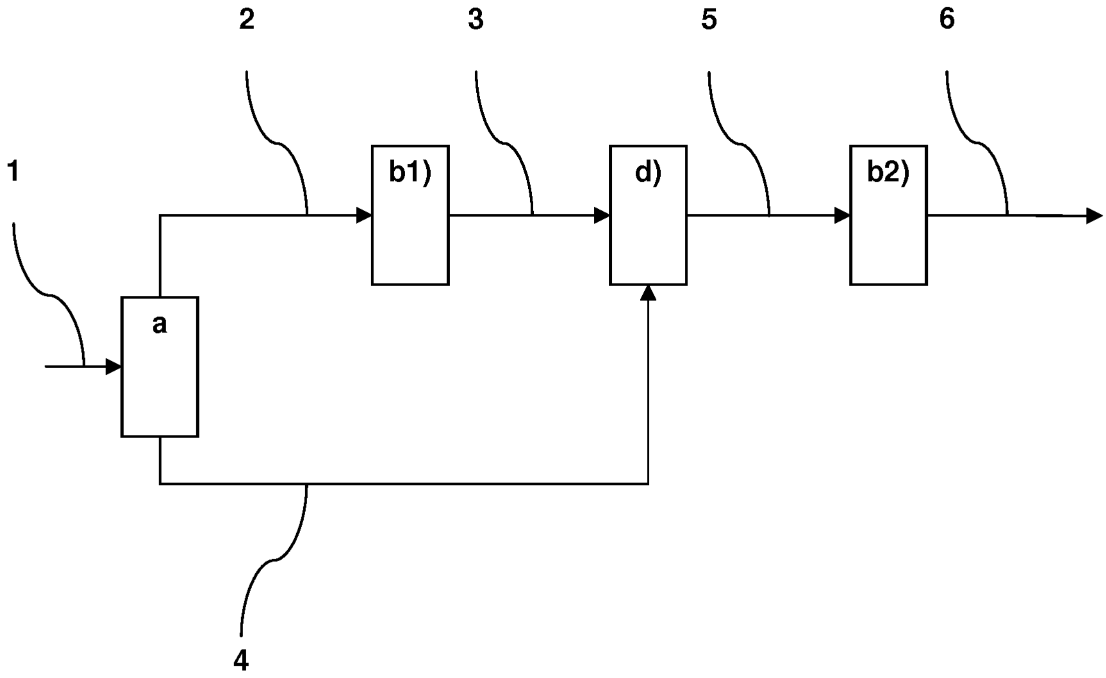

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6852144 B
- FR 2950265


### Littérature non-brevet citée dans la description


- **M.J.A. TIJMENSEN ; A.P.C. FAAIJ ; C.N. HAMELINCK ; M.R.M. VAN HARDEVELD.** Exploration of the possibilities for production of Fischer-Tropsch liquids and power via biomass gasification. *Biomass and Bioenergy,* 2002, vol. 23 (2), 129-152
- **C. HIGMAN ; M. VAN DER BURGT.** Gasification. Gulf Publishing, 2008
- **C. RATNASAMY ; J.P. WAGNER.** Water gas shift catalysis. *Catalysis Reviews,* 2009, vol. 51, 325-440
- Fischer-Tropsch Technology. *Studies in Surface Science and Catalysis,* 2004, vol. 152, 1-700
- **A. KOHL ; R. NIELSEN.** Gas Purification. Gulf Publishing, 1997
- Handbook of Chemistry and Physics. 2000